# EUROPEAN PATENT APPLICATION

(11) **EP 4 645 923 A1**
(43) Date of publication of application: **05.11.2025**
(21) Application number: 22969593.7
(22) Date of filing: 28.12.2022
(51) Int. Cl.: H04W 12/06, H04W 48/08, H04W 24/10

(54) **WIRELESS COMMUNICATION METHODS AND APPARATUS**

(71) Applicant: GUANGDONG OPPO MOBILE TELECOMMUNICATIONS CORP., LTD., Dongguan, Guangdong 523860 (CN)
(72) Inventor: XIONG, Lihui, Dongguan, Guangdong 523860 (CN); GAN, Lu, Dongguan, Guangdong 523860 (CN); CHEN, Jingran, Dongguan, Guangdong 523860 (CN)
(74) Representative: RGTH
(86) International application number: PCT/CN2022/142943
(87) International publication number: WO 2024/138441

(57) **Abstract**

Provided are wireless communication methods and an apparatus. A first method comprises: a terminal device receiving a first message, the first message comprising a first URSP rule and first verification information, the first URSP rule corresponding to a VPLMN of the terminal device; and the terminal device verifying the first verification information on the basis of the first URSP rule and a first secret key, the first verification information being obtained on the basis of the first URSP rule and the first secret key. The terminal device may verify the first verification information so as to determine, according to the verification result, whether the first URSP rule is tampered with, thereby effectively preventing the first URSP rule from being tampered with, and ensuring end-to-end integrity protection of the first URSP rule at the terminal device and a network side. A second method comprises: according to user consent information, a first device determining whether to perform a first operation, the first operation being related to an execution condition of a terminal device for a URSP. In the embodiments of the present application, according to the user consent information, the first device determines whether to execute the first operation, thus helping to prevent or reduce UE privacy leakage.

## Description

### TECHNICAL FIELD

This application relates to the technical field of communications, and more specifically, to a wireless communication method and an apparatus.

### BACKGROUND

A user equipment (user equipment, UE) policy, for example, a UE route selection policy (UE route selection policy, URSP) is introduced in some communications systems (for example, a new radio (new radio, NR) system). According to the URSP, a network can help a UE route application traffic to a corresponding protocol data unit (protocol data unit, PDU) session. However, a potential security issue still exists when the URSP is configured and executed based on a current URSP architecture.

### SUMMARY

This application provides a wireless communication method and an apparatus. Various aspects used in this application are described below.

According to a first aspect, a wireless communication method is provided, including: receiving, by a terminal device, a first message, where the first message includes a first URSP rule and a first verification information, and the first URSP rule corresponds to a visited public land mobile network (visited public land mobile network, VPLMN) of the terminal device; and verifying, by the terminal device, the first verification information based on the first URSP rule and a first key, where the first verification information is obtained based on the first URSP rule and the first key.

According to a second aspect, a wireless communication method is provided, including: receiving, by a data management network element, a first URSP rule, where the first URSP rule corresponds to a VPLMN of a terminal device; obtaining, by the data management network element, first verification information, where the first verification information is obtained based on the first URSP rule and a first key; and transmitting, by the data management network element, a first message to the terminal device, where the first message includes the first URSP rule and the first verification information.

According to a third aspect, a wireless communication method is provided, including: receiving, by an authentication server function (authentication server function, AUSF) network element, first information transmitted by a data management network element, where the first information is used by the AUSF network element to generate first verification information; and transmitting, by the AUSF network element, the first verification information to the data management network element, where the first verification information is generated based on a first URSP rule and a first key, and the first URSP rule corresponds to a VPLMN of a terminal device.

According to fourth aspect, a wireless communication method is provided, including: determining, by a first device based on user consent information, whether to execute a first operation, where the first operation is related to a status of executing a user equipment route selection policy URSP by a terminal device.

According to a fifth aspect, a terminal device is provided, including: a receiving module, configured to receive a first message, where the first message includes a first URSP rule and first verification information, and the first URSP rule corresponds to a VPLMN of the terminal device; and a verification module, configured to verify the first verification information based on the first URSP rule and a first key, where the first verification information is obtained based on the first URSP rule and the first key.

According to a sixth aspect, a data management network element is provided, including: a first receiving module, configured to receive a first URSP rule, where the first URSP rule corresponds to a VPLMN of a terminal device; an obtaining module, configured to obtain first verification information, where the first verification information is obtained based on the first URSP rule and a first key; and a first transmission module, configured to transmit a first message to the terminal device, where the first message includes the first URSP rule and the first verification information.

According to a seventh aspect, an AUSF network element is provided, including: a first receiving module, configured to receive first information transmitted by a data management network element, where the first information is used by the AUSF network element to generate first verification information; and a first transmission module, configured to transmit the first verification information to the data management network element, where the first verification information is generated based on a first URSP rule and a first key, and the first URSP rule corresponds to a VPLMN of a terminal device.

According to an eighth aspect, a device is provided, where the device is a first device, and the first device includes: a determining module, configured to determine, based on user consent information, whether to execute a first operation, where the first operation is related to a status of executing a URSP by a terminal device.

According to a ninth aspect, a terminal device is provided, including a processor, a memory, and a communications interface. The memory is configured to store one or more computer programs. The processor is configured to invoke the computer program in the memory, to cause the terminal device to perform some or all of the steps in the method according to the first aspect.

According to a tenth aspect, a data management network element is provided, including a processor, a memory, and a communications interface. The memory is configured to store one or more computer programs. The processor is configured to invoke the computer program in the memory, to cause the data management network element to perform some or all of the steps in the method according to the second aspect.

According to an eleventh aspect, an AUSF network element is provided, including a processor, a memory, and a communications interface. The memory is configured to store one or more computer programs. The processor is configured to invoke the computer program in the memory, to cause the AUSF network element to perform some or all of the steps in the method according to the third aspect.

According to a twelfth aspect, a device is provided, where the device is a first device, and the first device includes a processor, a memory, and a communications interface. The memory is configured to store one or more computer programs, and the processor is configured to invoke the computer program in the memory, to cause the first device to execute some or all of the steps in the method according to the fourth aspect.

According to a thirteenth aspect, an embodiment of this application provides a communications system, where the system includes the terminal device, the data management network element, or the AUSF network element that are described above. In another possible design, the system may further include another device that interacts with the terminal device, the data management network element, or the AUSF network element in the solutions provided in embodiments of this application.

According to a fourteenth aspect, an embodiment of this application provides a computer-readable storage medium. The computer-readable storage medium stores a computer program, and the computer program causes the terminal device, the data management network element, the AUSF network element, or the first device to perform some or all of the steps in the methods according to the foregoing various aspects.

According to a fifteenth aspect, an embodiment of this application provides a computer program product. The computer program product includes a non-transitory computer-readable storage medium that stores a computer program, and the computer program is operable to cause the terminal device, the data management network element, the AUSF network element, or the first device to perform some or all of the steps in the methods according to the foregoing various aspects. In some implementations, the computer program product may be a software installation package.

According to a sixteenth aspect, an embodiment of this application provides a chip. The chip includes a memory and a processor. The processor may invoke a computer program from the memory and run the computer program, to implement some or all of the steps described in the methods according to the foregoing various aspects.

In embodiments of this application, when receiving the first URSP rule, the terminal device receives the first verification information corresponding to the first URSP rule. In this way, the terminal device can verify the first verification information, to determine, based on a verification result, whether the first URSP rule is tampered with, thereby effectively preventing the first URSP rule from being tampered with, thus ensuring integrity protection of the first URSP rule on the terminal device side and a network side.

### BRIEF DESCRIPTION OF DRAWINGS

FIG. 1 is an example diagram of a system architecture of a wireless communications system to which embodiments of this application are applicable.
FIG. 2 is a schematic flowchart of reporting an unrecognized URSP rule by a UE.
FIG. 3 is a schematic flowchart of analyzing, by a network, application traffic of a UE that incorrectly implements a URSP rule.
FIG. 4 is a schematic flowchart of a wireless communication method according to an embodiment of this application.
FIG. 5 is a schematic flowchart of a wireless communication method according to another embodiment of this application.
FIG. 6 is a schematic diagram of a possible implementation of step S520.
FIG. 7 is a schematic flowchart of a wireless communication method according to still another embodiment of this application.
FIG. 8 is a schematic flowchart of a wireless communication method according to yet another embodiment of this application.
FIG. 9 is a schematic diagram of analyzing, by a network, application traffic for which a URSP rule is incorrectly implemented according to an embodiment of this application.
FIG. 10 is a schematic flowchart of reporting a status of executing a URSP by a UE according to an embodiment of this application.
FIG. 11 is a schematic flowchart of reporting a status of executing a URSP by a UE according to another embodiment of this application.
FIG. 12 is a schematic structural diagram of a terminal device according to an embodiment of this application.
FIG. 13 is a schematic structural diagram of a data management network element according to an embodiment of this application.
FIG. 14 is a schematic structural diagram of an AUSF network element according to an embodiment of this application.
FIG. 15 is a schematic structural diagram of a first device according to an embodiment of this application.
FIG. 16 is a schematic structural diagram of a communications apparatus according to an embodiment of this application.

### DESCRIPTION OF EMBODIMENTS

### Architecture of a communications system

Technical solutions of embodiments of this application may be applied to various communications systems, such as a global system for mobile communications (global system of mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an advanced long term evolution (advanced long term evolution, LTE-A) system, an LTE frequency division duplex (frequency division duplex, FDD) system, LTE time division duplex (time division duplex, TDD), a new radio (new radio, NR) system, an evolution system of the NR system, a non-terrestrial network (non-terrestrial networks, NTN) system, a terrestrial network (terrestrial networks, TN) system, and a 5th generation (5th-generation, 5G) system. The technical solutions provided in this application may further be applied to another communications system, such as a future communications system, for example, a 6th generation mobile communications system, for another example, a satellite communication system.

Generally, a quantity of connections supported by a conventional communications system is limited, and is also easy to implement. However, with development of communications technologies, a mobile communications system not only supports conventional communication, but also supports, for example, device-to-device (device to device, D2D) communication, machine-to-machine (machine to machine, M2M) communication, machine type communication (machine type communication, MTC), vehicle-to-vehicle (vehicle to vehicle, V2V) communication, or vehicle-to-everything (vehicle to everything, V2X) communication. Embodiments of this application may alternatively be applied to these communications systems.

The communications system in embodiments of this application may be applied to a carrier aggregation (carrier aggregation, CA) scenario, a dual connectivity (dual connectivity, DC) scenario, or a standalone (standalone, SA) networking scenario.

The communications system in embodiments of this application may be applied to an unlicensed spectrum, and the unlicensed spectrum may alternatively be considered to be a shared spectrum. Alternatively, the communications system in embodiments of this application may be applied to a licensed spectrum, and the licensed spectrum may alternatively be considered to be a dedicated spectrum.

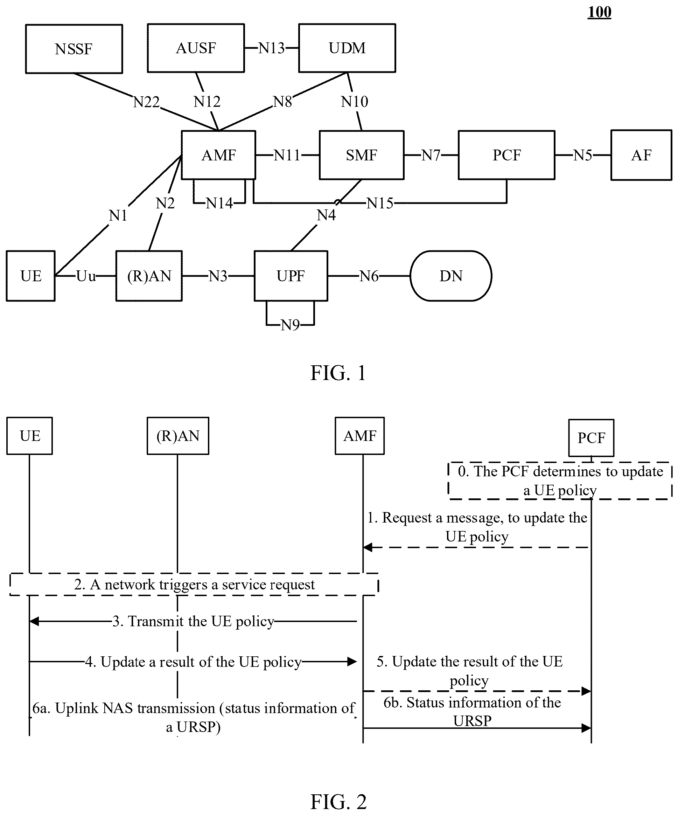

FIG. 1 is an example diagram of a system architecture of a wireless communications system 100 to which embodiments of this application are applicable. For example, the communications system is a 5G system architecture. The wireless communications system 100 may include a terminal device, an access network (access network, AN) device, a user plane function (user plane function, UPF) network element, an access and mobility management function (access and mobility management function, AMF) network element, a session management function (session management function, SMF) network element, a policy control function (policy control function, PCF) network element, and an application function (application function, AF) network element, a data network (data network, DN), and the like.

The following provides examples to describe functions of parts or network elements used in the wireless communications system 100 in a 5G network.

Terminal device: The terminal device may also be referred to as a user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like.

Access network device: The access network device may be configured to provide a network access function for an authorized terminal device in a specific area, and can use transmission channels of different quality according to a level, a service requirement, and the like of the terminal device. The access network device can manage a wireless resource, and provide an access service for the terminal device, to complete forwarding of a control signal and data between the terminal device and a core network.

The access network device may be a device in a wireless network. The access network device may also be referred to as a radio access network (radio access network, RAN) device or a network device. For example, the access network device may be a base station. The access network device in embodiments of this application may be a radio access network (radio access network, RAN) node (or device) that connects the terminal device to a wireless network. The base station may broadly cover various names in the following, or may be replaced with a name in the following, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device to device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks with a same access technology or different access technologies. A specific technology and a specific device form used by the access network device are not limited in embodiments of this application. In some deployments, the access network device in embodiments of this application may be a CU or a DU, or the access network device includes a CU and a DU. The gNB may further include an AAU.

UPF network element: The UPF is a user plane function in the core network, and may be responsible for forwarding and receiving of user data (for example, a service data flow) in the terminal device. For example, the UPF may receive user data from the DN, and transmit the user data to the terminal device by using the access network device. Alternatively, the UPF may receive user data from the terminal device by using the access network device, and then forward the user data to the DN. A transmission resource and a scheduling function in the UPF that provide a service for the terminal device are managed and controlled by the SMF.

AMF network element: The AMF is a mobility management function in the core network, and may be configured to implement functions other than session management in functions of a mobility management network element (mobility management entity, MME), such as lawful interception or access authorization (or authentication). In some embodiments, in addition to performing mobility management on the terminal device, the AMF may further be responsible for forwarding of a message related to session management between the terminal device and the SMF.

SMF network element: The SMF is a session management function in the core network, and is mainly responsible for session management, internet protocol (internet protocol, IP) address allocation and management of the terminal device, selection of a manageable user plane function, policy control, a termination point of a charging function interface, downlink data notification, and configuration of routing information for a user plane function.

PCF network element: The PCF is a policy management function in the core network, and may be responsible for formulation of policies related to mobility management, session management, charging, and the like of the terminal device. Specifically, the PCF may provide policy rule information and the like for a functional network element (for example, the AMF network element or the SMF network element) on a control plane, to manage and control mobility management, session management, and the like of the terminal device.

AF network element: The AF mainly supports interaction with a 3rd generation partnership project (3rd generation partnership project, 3GPP) core network to provide services, for example, affecting a data routing decision, a policy control function, or providing a network side with some services of a third party. In other words, the AF may be mainly configured to transfer a requirement of an application side on the network side. In some embodiments, the AF may be an internal application of an operator, such as an IP multimedia subsystem (IP multimedia subsystem, IMS) technology. In some embodiments, the AF may be understood as a third-party server, for example, an application server on an internet, which provides related service information, including providing the PCF with quality of service (quality of service, QoS) requirement information corresponding to a service, and transmitting user plane data information of a service to an A-UPF.

DN: The DN is a network that may be used to provide transmission data. The DN may be a private network such as a local area network, may be an external network that is not managed and controlled by an operator, such as the internet (internet), or may be a dedicated network deployed by all operators, such as a network providing an IMS service.

It should be understood that the foregoing network elements in the core network may alternatively be referred to as functional entities. This is not limited in this application. For example, the UPF network element may alternatively be referred to as a UPF entity, and the AMF network element may alternatively be referred to as an AMF entity. It should further be understood that in some embodiments, an xx network element or an xx functional entity may alternatively be directly referred to as an xx. For example, the UPF network element (or the UPF entity) may be referred to as the UPF, and the AMF network element (or the AMF entity) may be referred to as the AMF. For ease of description, the xx (such as the UPF or the AMF) mentioned in embodiments of this application may be the xx network element or the xx entity. Details are not described again below.

Optionally, the wireless communications system 100 may further include other network elements such as a unified data management (unified data management, UDM) network element, an authentication server function (authentication server function, AUSF) network element, a network slice selection function (network slice selection function, NSSF) network element, and a network exposure function (network exposure function, NEF) network element. This is not limited in embodiments of this application.

The UDM network element is a subscription database in the core network, and may be used for implementing functions, for example, generating and storing subscription data of a user in a 5G network and managing authentication data. The UDM network element may support an interaction with an external third-party server. The AUSF network element may be configured to: receive an identity authentication request for the terminal device from the AMF, request a key from the UDM, and then forward the delivered key to the AMF for authentication processing. The NSSF network element may be configured to perform network slice selection. The NEF network element may be configured to manage exposure of network data from 5G network elements. External untrusted applications are required to access internal data of the 5G core network through the NEF, to ensure security of a 3GPP network. In some embodiments, the NEF network element may further provide functions such as QoS capability exposure for external applications, event subscription, and AF request distribution.

In the wireless communications system 100 shown in FIG. 1, the parts or network elements may communicate with each other through interfaces. For example, the terminal device may perform an access stratum connection to the AN through a Uu interface, exchange an access stratum message, and transmit wireless data. The terminal device may perform a non access stratum (none access stratum, NAS) connection to the AMF through an N1 interface, and exchange a NAS message. The AN may be connected to the AMF through an N2 interface, to transfer radio bearer control information from a core network side to the AN. The UPF may perform data transmission with the AN through an N3 interface, and perform data transmission with the DN through an N6 interface, and the like. For interfaces configured to connect other parts or network elements, one may refer to FIG. 1. Details are not described herein again.

It should be understood that the AMF, the SMF, the PCF, the UDM, the AUSF, and the like shown in FIG. 1 may be understood as network elements for implementing different functions, for example, may be combined into a network slice as required. These network elements may be independent devices, may be integrated into a same device to implement different functions, may be network elements in hardware devices, may be software functions running on dedicated hardware, or may be virtualized functions instantiated on a platform (for example, a cloud platform). Specific forms of the network elements are not limited in this application.

It should be understood that the AMF, the SMF, the PCF, the UDM, the AUSF, and the like are merely names, and the names do not limit devices. In the 5G network and other future networks, the network elements corresponding to the AMF, the SMF, the PCF, the UDM, the AUSF, and the like may alternatively use other names. This is not specifically limited in embodiments of this application. For example, in a 6G system, some or all of the foregoing network elements may use 5G terms, or may use other names.

It should be understood that, the foregoing communications system 100 is described by using a 5G system as an example. Certainly, this application is also applicable to another 3GPP communications system, such as a 4G communications system, or a future 3GPP communications system. This is not limited in embodiments of this application.

It should be understood that all or some of functions of the communications device in this application may alternatively be implemented by software functions running on hardware, or by virtualization functions instantiated on a platform (for example, a cloud platform).

It should be understood that the system architecture described in embodiments of this application is intended to describe the technical solutions in embodiments of this application more clearly, and does not constitute any limitation on the technical solutions provided in embodiments of this application. It may be learned by a person skilled in the art that, with evolution of a network architecture, embodiments of this application may also be applicable to similar technical problems.

To facilitate understanding of embodiments of this application, the following first briefly describes some terms used in this application.

### Home public land mobile network

A public land mobile network (public land mobile network, PLMN) is a cellular mobile communication network of a standard of an operator in a country or region. A home public land mobile network (home PLMN, HPLMN) is a PLMN to which a UE subscribes, representing a home operator of the subscription UE.

### VPLMN

When a UE leaves a coverage of an HPLMN due to movement or another reason, and if there is a PLMN that meets following conditions: (1) The PLMN may cover a current location of the UE. (2) An operator of the PLMN signs a roaming agreement with an operator of the HPLMN of the UE (a commercial agreement between operators, content of which may include but is not limited to a problem such as a service and a charging manner provided for a subscription user of a network of the counterpart operator), the UE may access the PLMN, and the PLMN is referred to as a VPLMN. The UE accessing the VPLMN is referred to as roaming, and the UE in a roaming state may be referred to as a roaming UE.

### URSP

Policy control, as a nerve center of a communication network, is responsible for making various complex policy decisions. UE policies are introduced in a network (for example, a 5G network). A URSP is one of the UE policies, and may be used by a UE to determine whether an application may be associated with an established PDU session or whether to trigger establishment of a new PDU session. The URSP may be provided by a PCF in an HPLMN or pre-configured on the UE. It should be noted that when both a pre-configured URSP and a URSP provided by the PCF exist on the UE, the UE uses only the URSP provided by the PCF.

The URSP includes at least one URSP rule. When valid URSP rules exist on the UE, the UE performs matching between the application and the URSP rules, to determine how to route an uplink data packet. In an example, an example of content of a URSP rule is provided below with reference to Table 1.

**Table 1**

| URSP rule | |
|---|---|
| Rule priority | Priority of applying the rule |
| Traffic identifier | Identifier of an operating system and an application identifier on the operating system |
| | IP descriptor (a target IP triplet: a destination address, a destination port number, and a protocol ID) |
| | Full qualified domain name FQDN |
| | Non-IP descriptor |
| Route selection descriptor | Network slice selection |
| | Access type preference |

Each URSP rule includes a rule priority value that determines a priority of the URSP rule in a URSP.

A traffic identifier (traffic identifier, TD) may be used to indicate a function range of the URSP rule. In an example, the traffic identifier may be an application identifier (application identifier, AppID), an IP triplet (a destination address, a destination port number, and a protocol ID), a full qualified domain name (full qualified domain name, FQDN), or the like.

A route selection descriptor may include one or more components, for example, may include session and service continuity (session and service continuity, SSC) mode selection, network slice selection, and access type preference (such as a 3GPP access or a non-3GPP access).

The following briefly describes a procedure of the UE performing matching between the application and the URSP rules.

When the UE performs matching between application traffic and a PDU session by using the URSP rule configured by the PCF or locally, the UE needs to refer to a parameter, for example, the rule priority, in the URSP rule. For an application (or application traffic), if an existing PDU session can match, the UE associates the application with the existing PDU session, and transmits the application traffic of the application on the existing PDU session; or if no existing PDU session can match, the UE attempts to establish a new PDU session by using a selected route selection descriptor.

In a process of the UE establishing the new PDU session, after a PDU session establishment request is accepted, the UE binds the application traffic to the established new PDU session. If a PDU session establishment request is rejected, the UE selects another value combination in a currently selected route selection descriptor based on a rejection reason if any other value of a rejected component in the same route selection descriptor may be used. Otherwise, the UE selects, in a route selection descriptor priority order, a next route selection descriptor including a combination of component values that are not rejected by a network. If the UE cannot establish a PDU session with any route selection descriptor, the UE attempts to use other URSP rules in a rule priority order.

In some embodiments, the PCF may transmit a URSP rule with a wildcard traffic identifier to the UE for routing a service of an application that does not match any other URSP rule. The URSP rule with the wildcard traffic identifier is a last URSP rule and has a lowest priority.

### Configure a URSP of a VPLMN for a roaming UE

As described above, the URSP is generally pre-configured on the UE or configured to the UE by the PCF in the HPLMN. When the UE is in a roaming state, with the foregoing configuration manner, mapping between application traffic and a PDU session that is established by the roaming UE according to the URSP rule can not be well applicable to a network environment of the UE. Therefore, to enable the roaming UE to better map the application traffic and the PDU session, a relevant function of the URSP is enhanced in a relevant technology, and a VPLMN-specific (VPLMN specific) URSP rule is added for a UE roaming scenario.

Relevant research on the VPLMN-specific URSP rule mainly includes following conclusions: 1. An H-PCF (a PCF in an HPLMN) provides the VPLMN-specific URSP rule to the UE. 2. An H-PCF considers service parameters from a V-PCF (a PCF in the VPLMN) and a V-AF (an AF in the VPLMN) to generate the VPLMN-specific URSP rule. 3. How to provide, to the H-PCF, the service parameter provided by the V-AF.

The conclusion 3 may be implemented in the following manners. In an implementation, the V-AF may provide the service parameter to a V-NEF and store the service parameter in a V-UDR (a unified data repository (unified data repository, UDR) network element located in the VPLMN), and the V-PCF may obtain the service parameter. In another implementation, the V-AF may provide the service parameter to an H-NEF and store the service parameter in an H-UDR, and the H-PCF directly obtains the service parameter from the H-UDR. It should be noted that the service parameter is set by the AF for a specific subscriber in a specific PLMN to guide the URSP rule.

### A core network learns a status of executing a URSP by a UE

Based on a relevant technology, it is being researched whether and how to enable the core network to learn whether or when the UE executes a URSP rule according to the URSP rule provided by the core network, to route application traffic to a PDU session. In some current solutions, UE assistance is used to help the core network recognize whether and when the UE executes the URSP rule.

Currently, the above research mainly includes following research conclusions: 1. The UE may choose to report the status of executing the URSP, and a PCF may obtain relevant information by monitoring a PDU session parameter of the UE. 2. If the UE reports the status of executing the URSP, to reduce signaling overheads of the UE reporting the status of executing the URSP, the UE reporting is limited to some application traffic and a specific UE. 3. URSP options reported by the UE may include: a traffic identifier (TD) of the URSP rule, an application function identifier (AF ID) associated with the URSP rule, and a route selection descriptor enforced by the UE for an application program. Optionally, the UE may transmit, to the core network by using an uplink NAS message (for example, during a NAS message related to PDU session modification establishment/modification or a non-PDU session), the URSP options reported by the UE. 4. In consideration of privacy, when the UE selects a URSP rule with a wildcard route selection descriptor, the UE is not required to report a relevant rule; because in this case, the UE reporting is no longer limited to a specific application, but may be performed on any application. 5. The core network recognizes traffic that is not routed to the UE according to the URSP rule.

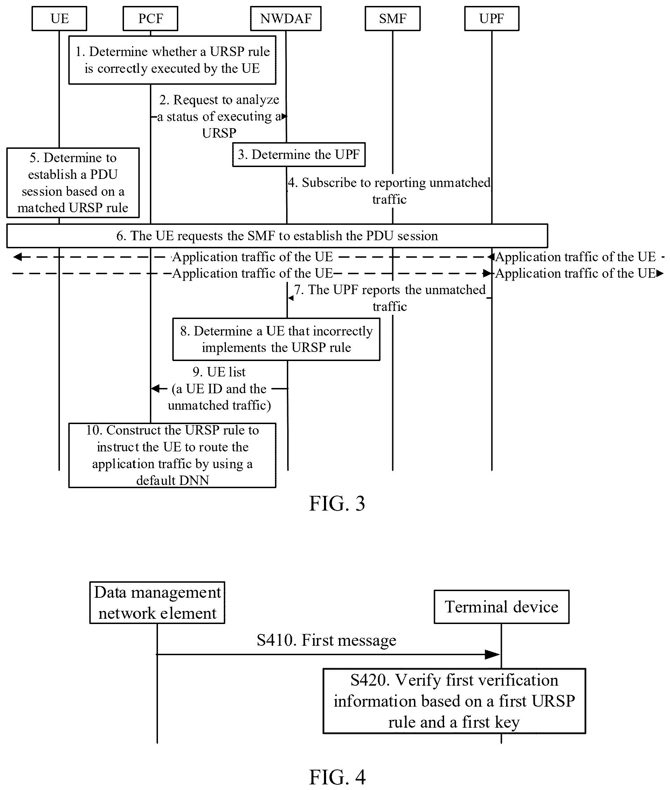

The foregoing conclusion 5 may be implemented in the following manners. In an implementation, the UE reports an unsupported value to the PCF, and then the PCF provides a URSP rule including only a supported value, thereby reducing unnecessary signaling and preventing the UE from storing a URSP rule that is not used or is rejected. In another implementation, the PCF recognizes, by using a network data analytics function (network data analytics function, NWDAF) network element, application traffic of a UE that incorrectly implements the URSP rule. The following respectively describes the two implementations with reference to FIG. 2 and FIG. 3.

FIG. 2 is a schematic flowchart of a UE reporting an unrecognized URSP rule. In some embodiments, a procedure of the UE reporting the unrecognized URSP rule may be understood as an extension of the UE configuring an update procedure.

The procedure shown in FIG. 2 may include step 0 to step 6b. The following describes the steps.

In step 0, a PCF decides to update a UE policy based on a trigger condition. For example, the PCF decides to update a URSP based on the trigger condition.

In step 1, the PCF transmits a request message to an AMF, to update the UE policy.

For example, the PCF may invoke a Namf_Communication_N1N2MessageTransfer service provided by the AMF, to transmit the message to the AMF. The message includes a subscription permanent identifier (subscription permanent identifier, SUPI) of the UE and a UE policy container (UE policy container).

In step 2, if the UE is registered to the AMF in a 3GPP or non-3GPP access manner, the AMF may transparently transmit the UE policy container to the UE.

In step 3, the AMF transparently transmits, to the UE, the UE policy container from the PCF, where the UE policy container includes an indication of obtaining UE-related URSP information.

In step 4, after receiving the indication, the UE evaluates each of URSP rules in the received UE policy container and acknowledges which components (for example, a TD type, TD="FQDN=ABC.com") in the UPSR rules are not recognized by the UE, and the UE updates the UE policy and transmits a result of the updating UE policy to the AMF.

In step 5, the AMF transmits, to the PCF, the result of updating the UE policy by the UE.

In an implementation, the AMF may transmit, to the PCF by invoking a Namf_Communication_N1MessageNotify service, the result of updating the UE policy.

In step 6a, the UE reports status information of the URSP rule in the UE policy container to the AMF.

In step 6b, the AMF transmits the status information of the URSP rule to the PCF.

In an implementation, the AMF may transmit the status information of the URSP rule to the PCF by invoking the Namf_Communication_N1MessageNotify service.

Based on the foregoing steps, the PCF may update a parameter based on a feedback of the UE (for example, if some parameters in a TD are configured incorrectly), and provide an updated URSP to the UE again.

FIG. 3 is a schematic flowchart of a PCF analyzing, by using an NWDAF, application traffic of a UE that incorrectly implements a URSP rule. A procedure shown in FIG. 3 may include step 1 to step 10.

In step 1, if the PCF needs to determine whether the URSP rule is correctly executed by the UE, the PCF locally configures which URSP rules executed by the UE need to be checked.

In step 2, a consumer (that is, the PCF) requests the NWDAF to analyze a status of executing a URSP.

In an implementation, a request transmitted by the consumer may include an analysis ID and an analysis filter that are related to an analysis of the status of executing the URSP. The analysis ID may be used to indicate to request to analyze the status of executing the URSP. The analysis filter may include one or more of following information: single network slice selection assistance information (single network slice selection assistance information, S-NSSAI) or a data network name (data network name, DNN) of a PDU session established by the UE; application traffic allowed, according to the URSP rule, to flow to the PDU session; an area of interest; or a UE or a UE list. The application traffic allowed to flow to the PDU session may include a traffic identifier (such as an application ID or an FQDN) of the URSP rule, or may include an allowed service data flow (the consumer may determine the allowed service data flow based on the traffic identifier).

In step 3, if the request transmitted by the consumer includes the UE, the NWDAF subscribes to all SMFs that support an S-NSSAI/DNN request; and when the UE establishes a PDU session, the SMF transmits a UE ID and an IP address of the UE to the NWDAF.

In step 4, the NWDAF subscribes to a UPF for reporting unmatched traffic.

In an implementation, the NWDAF may transmit a Nupf_EventExposure_Subscribe request to the UPF, to subscribe to reporting the unmatched traffic. The Nupf_EventExposure_Subscribe request may include following content: a new event ID, for example, "unmatched traffic"; a traffic filter indicating allowed traffic, for example, using an IP quintuple or an application program ID for indication; an S-NSSAI/DNN of a PDU session to be checked; and a target (such as a single UE, a group of UEs, or any UE) of an event report.

In step 5, the UE determines, based on application traffic matching the URSP rule, to establish the PDU session.

In step 6, the UE requests the SMF to establish the PDU session.

In step 7, when the UPF receives traffic (on a downlink or an uplink) for the UE, the UPF reports the unmatched traffic and a detected service data flow.

In an implementation, the UPF may invoke a Nupf_EventExposure_Notify service to report one or more of the unmatched application traffic, used data, a serving SMF, the IP address of the UE, or the UE ID.

In step 8, the NWDAF compiles a UE list, where application traffic in the UE list is transmitted to a wrong S-NSSAI/DNN.

In step 9, the NWDAF provides the UE list.

In step 10, the PCF may construct a new URSP rule to route traffic detected by using a different S-NSSAI/DNN, for example, by using a default DNN.

From the above descriptions, it may be seen that although the URSP can enable a network to help the UE route the application traffic to the corresponding PDU session, a potential security issue still exists when the URSP is configured and executed based on a current URSP architecture.

For example, in a case in which an HPLMN configures a VPLMN-specific URSP rule for a roaming UE, an H-PCF generates the VPLMN-specific URSP rule and transmits the VPLMN-specific URSP rule to the UE through a roaming network architecture. However, during transmission of the URSP rule, the URSP rule may be maliciously tampered with. In this case, the UE may incorrectly route the application traffic to an existing PDU session, or the application traffic of the UE cannot be transmitted due to a failure to establish the corresponding PDU session according to a wrong URSP rule.

For another example, to better configure a UE policy on a network side, the UE may report a status of executing a relevant URSP. However, the network side may learn, based on the status of executing the URSP that is reported by the UE, when the UE routes the application traffic to the PDU session, that is, further learn how long (for example, when to start and when to end) the UE uses a specific application. In addition, when the network side analyzes the application traffic by using the NWDAF, privacy information of the UE may be exposed.

To sum up, the potential security issue still exists when the URSP is configured and executed based on the current URSP architecture.

For the above problem, this application provides two embodiments to configure a security mechanism for the URSP. Embodiment 1 aims to resolve how a network side securely transmits a URSP rule to a UE in a roaming scenario. Embodiment 2 aims to resolve how a network side avoids a privacy leakage of a UE when the network side learns a status of executing a URSP by the UE. The following separately describes Embodiment 1 and Embodiment 2.

### Embodiment 1

FIG. 4 is a schematic flowchart of a wireless communication method according to an embodiment of this application. The method shown in FIG. 4 is described from a perspective of an interaction between a terminal device and a data management network element. For example, the terminal device and the data management network element may be respectively the terminal device and the UDM network element in the system architecture shown in FIG. 1. In some embodiments, an interaction between an AUSF network element and the data management network element and/or the terminal device is further involved in the method provided in embodiments of this application.

It should be understood that the data management network element in embodiments of this application may generate and store subscription data of a user in a network, manage authentication data, and the like. The data management network element may support an interaction with an external third-party server. The AUSF may be used for an authentication service, key generation, and bi-directional authentication on a UE. The data management network element and the AUSF are just names, and the names do not limit devices. In a 5G network and other future networks, the network elements may alternatively use other names. This is not specifically limited in embodiments of this application. For example, in a 6G system, some or all of the foregoing network elements may use 5G terms, or may use other names.

In some embodiments, the data management network element and the AUSF in embodiments of this application may be a data management network element and an AUSF in an HPLMN of the UE.

The method shown in FIG. 4 may include step S410 and step S420. The following describes the steps.

In step S410, the data management network element transmits a first message to the UE. The first message includes a first URSP rule and first verification information.

The first URSP rule is one or more URSP rules included in a URSP transmitted by a network to the UE. The UE may perform matching between an application (or application traffic) and the first URSP rule, to determine how to route the application traffic or a data packet.

The first URSP rule corresponds to a VPLMN of the UE. In other words, the first URSP rule is associated with the VPLMN of the UE. In other words, the first URSP rule is a URSP rule transmitted by the network to the UE when the UE is in a roaming state. In other words, the first URSP rule is a URSP rule transmitted by the network to the roaming UE.

In some embodiments, the first URSP rule is a URSP rule that is specific to the VPLMN of the UE and that is configured for the UE. Alternatively, the first URSP rule is a VPLMN-specific URSP rule in a UE roaming scenario.

In some embodiments, the first URSP rule may be generated by a PCF. For example, the first URSP rule may be generated by an H-PCF.

In some embodiments, the PCF may generate the first URSP rule with reference to a VPLMN-related service parameter. An example in which the first URSP rule is generated by the H-PCF is used. The H-PCF may generate the first URSP rule with reference to a service parameter from a V-PCF and/or a service parameter from a V-AF, so that the UE can better map application traffic and a PDU session.

An implementation of providing the service parameter to the H-PCF by the V-AF is not specifically limited in embodiments of this application. For example, in an implementation, the V-AF may provide the service parameter to a V-NEF and store the service parameter in a V-UDR, and the V-PCF may obtain the service parameter. In another implementation, the V-AF may provide the service parameter to an H-NEF and store the service parameter in an H-UDR, and the H-PCF directly obtains the service parameter from the H-UDR.

Content included in the first URSP rule is not specifically limited in embodiments of this application. For example, the first URSP rule may include following content: a rule priority of the first URSP rule; a traffic identifier of the first URSP rule; and a route selection descriptor of the first URSP rule. For detailed descriptions of specific content of the first URSP rule, one may refer to the foregoing descriptions or related descriptions of a conventional technology. For brevity, details are not repeated herein again.

The first verification information is associated with the first URSP rule. In other words, the first verification information is verification information of the first URSP rule, that is, the first verification information may be used to verify whether the first URSP rule is tampered with, or the first verification information may be used to verify the integrity of the first URSP rule. In some embodiments, the first verification information may be a message verification code, and the message verification code is used to verify whether the first URSP rule is tampered with or to verify the integrity of the first URSP rule.

In some embodiments, the first verification information is obtained based on the first URSP rule and a first key. In other words, the first verification information is generated based on the first URSP rule and the first key. In some embodiments, the first verification information may be URSP-MAC-Iausf that is generated based on the first URSP rule and the first key.

The first key is a key determined through negotiation between the UE and the network. Both the UE and a network side store the first key. For example, an AUSF and/or a data management network element (for example, UDM) on the network side store the first key, and correspondingly, a UE side also stores the first key.

In some embodiments, the first key is Kausf. Kausf is a key determined through negotiation between the UE and the network when the UE is registered to the network. For a specific negotiation process of Kausf and storage of Kausf, one may refer to a relevant conventional technology. Details are not repeated herein.

A generation manner of the first verification information is not limited in embodiments of this application. In an implementation, the first verification information may be generated based on a key derivation function (key derivation function, KDF). For example, the first URSP rule and the first key may be used as input parameters of the KDF, and the first verification information is generated by using the KDF.

In some embodiments, the first verification information generated by using the KDF may be a hash (hash) value. For example, the hash value may be calculated for the first URSP rule by using the first key according to the KDF, and the calculated hash value may be used as the first verification information.

In some embodiments, the process of transmitting the first message to the UE by the data management network element may include: transmitting the first message to the UE by the data management network element by using an AMF. For example, the data management network element may transparently transmit the first message to the UE by using the AMF. Specifically, the data management network element may transmit the first message to the AMF, and the AMF forwards the first message to the UE. In some embodiments, the foregoing AMF may be an AMF (V-AMF) located in the VPLMN.

In some embodiments, the process of transmitting the first message to the UE by the data management network element may include: directly transmitting the first message to the UE by the data management network element, for example, by using a downlink NAS message.

In step S420, the UE verifies the first verification information based on the first URSP rule and the first key.

As described above, the first verification information is obtained based on the first URSP rule and the first key. In this case, after receiving the first URSP rule and the first verification information, the UE may verify the first verification information based on the first URSP rule and the first key, to determine, based on a verification result of the first verification information, whether the first URSP rule is tampered with or to determine the integrity of the first URSP rule.

In an implementation, the process of verifying the first verification information by the UE based on the first URSP rule and the first key may include: generating, by the UE, third verification information based on the first URSP rule and the first key, and determining, by the UE, whether the third verification information is the same as the first verification information. If the third verification information is the same as the first verification information, the UE may determine that the first URSP rule is not tampered with; or if the third verification information is different from the first verification information, the UE may determine that the first URSP rule is tampered with.

A process of generating the third verification information by the UE is similar to a process of generating the first verification information by the network side. For example, both the network side and the UE generate the first verification information or the third verification information based on the same key (the first key). Alternatively, a manner in which the network side generates the first verification information is the same as the manner in which the UE generates the third verification information. For example, in a case in which the network side generates the first verification information based on the KDF, the UE also generates the third verification information based on the KDF. In this way, if the first URSP rule used by the UE to generate the third verification information is the same as a first URSP rule used by the network side to generate the first verification information, the third verification information generated by the UE is the same as the first verification information generated by the network side. This proves that the first URSP rule received by the UE side is not tampered with. In contrast, if the first URSP rule used by the UE to generate the third verification information is different from a first URSP rule used by the network side to generate the first verification information, the third verification information generated by the UE is also different from the first verification information generated by the network side. This proves that the first URSP rule received by the UE side is tampered with.

However, a specific implementation of verifying the first verification information by the UE based on the first URSP rule and the first key is not limited in embodiments of this application. In addition to the foregoing manner of generating the third verification information and determining whether the third verification information is the same as the first verification information, the following manner may alternatively be used: The network side encrypts the first URSP rule by using the first key to generate the first verification information. In this case, after receiving the first verification information, the UE decrypts the first verification information by using the first key.

In embodiments of this application, when receiving the first URSP rule, the terminal device receives the first verification information corresponding to the first URSP rule. In this way, the terminal device may verify the first verification information, to determine, based on the verification result, whether the first URSP rule is tampered with, thereby effectively preventing the first URSP rule from being tampered with, thus ensuring integrity protection of the first URSP rule on the terminal device and the network side.

In some embodiments, the UE may further receive first indication information. For example, the first message may include the first indication information. The first indication information is used to indicate a quantity of times the network transmits the first URSP rule to the UE.

In some embodiments, if the UE receives the first indication information, it may indicate that the network side generates the first verification information with reference to the first indication information. An example in which the first verification information is generated based on the KDF is used. When generating the first verification information, the network side may input the first indication information as a freshness derived from the first verification information, to mitigate or prevent a replay attack. In an implementation, when the network side generates the first verification information, the first indication information may be increased by 1 to indicate that the quantity of times the network transmits the first URSP rule to the UE is increased by 1. Subsequently, the first verification information and the first URSP rule are transmitted to the UE.

In this case, in a case in which the UE receives the first indication information, the process of verifying the first verification information by the UE based on the first URSP rule and the first key may include: verifying, by the UE, the first verification information based on the first URSP rule, the first key, and the first indication information. In a specific implementation, the UE may input the received first indication information as a freshness derived from the third verification information, generate the third verification information, and determine whether the third verification information is the same as the first verification information.

In some embodiments, the first indication information may be transmitted by the AUSF to the data management network element, so that the data management network element transmits the first indication information to the UE, to cause the UE to verify the first verification information based on the first indication information.

In some embodiments, the first indication information may be indicated by a counter value. The first message may carry a first counter value to indicate the quantity of times the network transmits the first URSP rule to the UE.

In some embodiments, the first indication information may be maintained by a counter (for example, a URSP counter). In an implementation, the network side (for example, the AUSF) and the UE may associate the counter with the first key, and respectively store the counter and the first key. When the UE newly derives the first key, the network side and the UE initialize the counter to an initial value. For example, when the counter is a 16-bit counter, the network side and the UE may separately initialize the counter to 0x00.

In some embodiments, if the quantity (for example, the counter value indicated by the first indication information), indicated by the first indication information, of times the network transmits the first URSP rule to the UE is less than or equal to a quantity, stored in the terminal device, of times the network transmits the first URSP rule to the UE, the UE may discard the first message. This is because both the network side and the UE record the quantity of times the network transmits the first URSP rule to the UE. In this case, when the network transmits the first indication information to the UE, normally, the quantity of times that is indicated by the first indication information is required to be greater than a quantity of times that is stored in the UE, to prove that a first URSP rule transmitted this time is a URSP rule newly transmitted by the network. When the quantity of times that is indicated by the first indication information is less than or equal to the quantity of times that is stored in the UE, it proves that a first URSP rule transmitted this time may be received by the UE before. The first URSP rule may be a URSP rule that is transmitted by an attacker to the UE and that is already received by the UE, to deceive a system. In this case, the first message is discarded in embodiments of this application, so that a replay attack can be mitigated or avoided.

The following provides an example of generating the first verification information or the third verification information based on the KDF.

When the first verification information or the third verification information is generated by using the first key as an input key, an input parameter in the KDF may include: FC=0xXX, where FC is used to distinguish between different algorithm types; p0=the first URSP rule; L0=a length of the first URSP rule; P1=the first indication information; and L1=a length of the first indication information. The KDF may output the first verification information or the third verification information based on the foregoing input parameter, and the first verification information or the third verification information may be, for example, a lowest 128-bit identifier.

In some embodiments, the UE may further receive second indication information. For example, the first message may include the second indication information. The second indication information is used to indicate that the UE feeds back acknowledgment information of the first URSP rule.

In some embodiments, if the UE receives the second indication information, it may indicate that the UE needs to transmit the acknowledgment information of the first URSP rule to the network side, so that the network side determines whether the UE receives the first URSP rule and whether the first URSP rule is correctly received.

Specific content of the second indication information is not limited in embodiments of this application. The second indication information may be any value used to indicate an acknowledgment value of the first URSP rule. For example, the second indication information may include any string and/or number.

In a case in which the UE receives the second indication information, the method in embodiments of this application further includes a following step: transmitting, by the UE, second verification information to the data management network element.

The second verification information is associated with the second indication information. In other words, the second verification information is verification information of the second indication information, that is, the data management network element may determine whether the UE successfully receives the first URSP rule based on the second verification information. In some embodiments, the second verification information may be a message verification code, and the data management network element determines whether the UE successfully receives the first URSP rule by using the message verification code.

In some embodiments, the second verification information is obtained based on the first key and the second indication information. In other words, the second verification information is generated based on the first key and the second indication information. In some embodiments, the second verification information may be URSP-MAC-Iue that is generated by the UE based on the first key and the second indication information.

A generation manner of the second verification information is not limited in embodiments of this application. In an implementation, the second verification information may be generated based on the KDF. For example, the first key and the second indication information may be used as input parameters of the KDF, and the second verification information is generated by using the KDF.

In some embodiments, the second verification information generated by using the KDF may be a hash (hash) value. For example, the hash value may be calculated for the second indication information by using the first key according to the KDF, and the calculated hash value may be used as the second verification information.

In some embodiments, the UE may generate the second verification information with reference to the first indication information. An example in which the second verification information is generated based on the KDF is used. When generating the second verification information, the first indication information may be inputted as a freshness derived from the second verification information.

In some embodiments, in a case in which the UE transmits the second verification information to the data management network element, the method in embodiments of this application may further include a following step: obtaining, by the data management network element, fourth verification information, and determining whether the second verification information is the same as the fourth verification information. If the second verification information is the same as the fourth verification information, the data management network element may determine that the UE successfully receives the first URSP rule; or if the second verification information is different from the fourth verification information, the data management network element may determine that the UE fails to receive the first URSP rule.

In an implementation, the process of obtaining the fourth verification information by the data management network element may include: receiving, by the data management network element, fourth verification information transmitted by another network element (for example, an AUSF) on the network side. The fourth verification information is, for example, generated by the AUSF based on the first key and the second indication information.

A process of generating the fourth verification information by the AUSF is similar to the process of generating the second verification information by the UE. For example, both the UE and the AUSF generate the second verification information or the fourth verification information based on the same key (the first key). Alternatively, the manner in which the UE generates the second verification information is the same as a manner in which the AUSF generates the fourth verification information. For example, in a case in which the UE generates the second verification information based on the KDF, the AUSF also generates the fourth verification information based on the KDF. In this way, if the second indication information used by the UE to generate the second verification information is the same as second indication information used by the AUSF to generate the fourth verification information, the second verification information generated by the UE is the same as the fourth verification information generated by the AUSF. This proves that the UE successfully receives the first URSP rule. In contrast, if the second indication information used by the UE to generate the second verification information is different from second indication information used by the AUSF to generate the fourth verification information, the second verification information generated by the UE is also different from the fourth verification information generated by the AUSF. This proves that the UE fails to receive the first URSP rule.

In some embodiments, before generating the fourth verification information, the AUSF may further receive the second indication information transmitted by the data management network element, so that the AUSF generates the fourth verification information based on the second indication information and the first key.

In another implementation, the process of obtaining the fourth verification information by the data management network element may include: generating, by the data management network element, the fourth verification information based on the first key and the second indication information. For a process in which the data management network element generates the fourth verification information, one may refer to the foregoing process in which the AUSF generates the fourth verification information. Details are not repeated herein again.

The following provides an example of generating the second verification information or the fourth verification information based on the KDF.

When the second verification information or the fourth verification information is generated by using the first key as an input key, an input parameter in the KDF may include: FC=0xXX, where FC is used to distinguish between different algorithm types; P0=the second indication information; L0=a length of the second indication information; P1=the first indication information; and L1=a length of the first indication information. The KDF may output the second verification information or the fourth verification information based on the foregoing input parameter, and the second verification information or the fourth verification information may be, for example, a lowest 128-bit identifier.

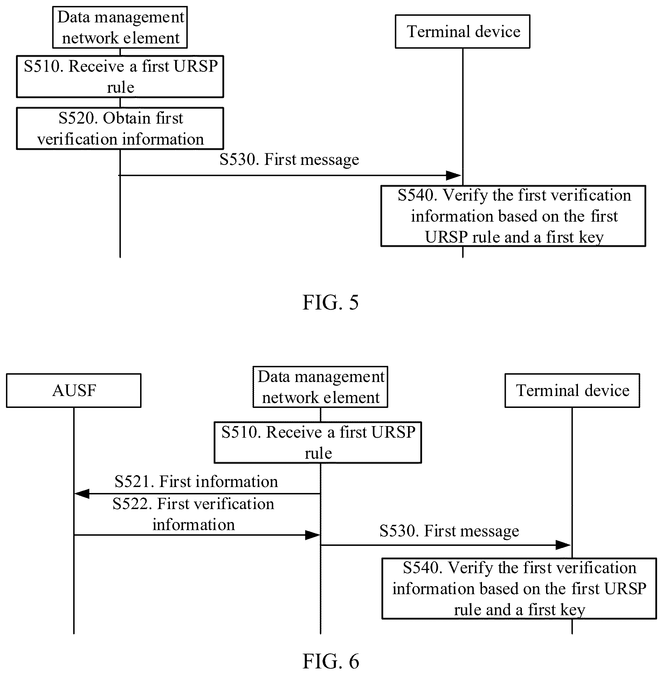

FIG. 5 is a schematic flowchart of a wireless communication method according to another embodiment of this application. The method shown in FIG. 5 may include step S510 to step S540.

In step S510, a data management network element receives a first URSP rule.

In some embodiments, the first URSP rule may be generated by an H-PCF. After generating the first URSP rule, the H-PCF may transmit the first URSP rule to the data management network element, so that the data management network element obtains first verification information corresponding to the first URSP rule, and transmits the first URSP rule and the first verification information to a UE. In other words, in some embodiments, the data management network element may receive the first URSP rule from the H-PCF.

In some embodiments, in addition to transmitting the first URSP rule to the data management network element, the H-PCF may further transmit a UE ID to the data management network element. The UE ID is used to indicate, to the data management network element, a UE or UEs for which the first URSP rule is configured.

The first URSP rule corresponds to a VPLMN of the UE. For example, the first URSP rule is a VPLMN-specific URSP rule configured for the UE. Alternatively, the first URSP rule is a VPLMN-specific URSP rule configured for a roaming UE.

In step S520, the data management network element obtains the first verification information.

In some embodiments, the data management network element may obtain the first verification information from an AUSF. In a possible implementation, as shown in FIG. 6, step S520 may include step S521 and step S522.

In step S521, the data management network element transmits first information to the AUSF. The first information is used by the AUSF to generate the first verification information.

In some embodiments, the first information may include one or more of following information: an identity of the UE or the first URSP rule.

In some embodiments, the identity of the UE in the first information may be an SUPI of the UE. However, embodiments of this application are not limited thereto. In some embodiments, the identity of the UE in the first information may alternatively be a subscription concealed identifier (subscription concealed identifier, SUCI), a generic public subscription identifier (generic public subscription identifier, GPSI), and the like of the UE.

In some embodiments, the first information may further include second indication information, and the second indication information is used to indicate that the UE feeds back acknowledgment information of the first URSP rule.

In step S522, the AUSF transmits the first verification information to the data management network element.

After obtaining the first verification information from the AUSF, the data management network element may transmit the first verification information to the UE, so that the UE verifies the first verification information.

As shown in FIG. 5 or FIG. 6, in step S530, the data management network element transmits a first message to the UE.

In step S540, the UE verifies the first verification information based on the first URSP rule and a first key.

For detailed descriptions of step S530 and step S540, one may refer to the foregoing related descriptions of step S410 and step S420. For brevity, details are not described herein again.

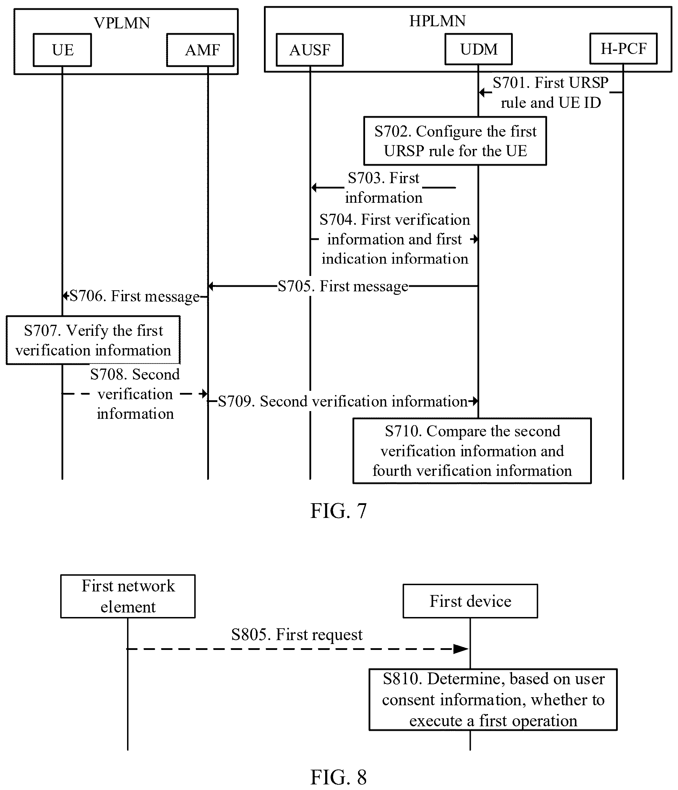

For ease of understanding, a specific example is provided below with reference to FIG. 7, to exemplarily describe a procedure of embodiments of this application. It should be noted that in the example, the data management network element is UDM.

FIG. 7 is a schematic flowchart of a wireless communication method according to still another embodiment of this application. The method shown in FIG. 7 may include step S701 to step S710.

In step S701, an H-PCF generates a VPLMN-specific first URSP rule for a roaming UE, and transmits the first URSP rule and a UE ID to UDM.

In step S702, the UDM configures the received first URSP rule for the UE.

In step S703, the UDM transmits first information to an AUSF.

The first information may include an SUPI of the UE, the first URSP rule, and second indication information. The second indication information may be, for example, an acknowledgment identifier (ACK identifier), used to indicate that acknowledgment information needs to be received from the UE.

In some embodiments, the UDM may transmit the first information to the AUSF by using a Nausf_URSPProtection message.

In step S704, the AUSF generates first verification information by using a first key, the first URSP rule, and first indication information, and transmits the first verification information and the first indication information to the UDM.

The first verification information may be understood as verification information of the first URSP rule for integrity and anti-replay protection.

In some embodiments, the AUSF may further calculate fourth verification information. Then, the AUSF may further transmit the calculated fourth verification information to the UDM.

In some embodiments, the AUSF may transmit one or more of the first verification information, the first indication information, or the fourth verification information to the UDM by using a Nausf_URSPProtection Response message.

In step S705, the UDM transmits a first message to an AMF. The first message may include the first URSP rule, the first verification information, and the first indication information.

In some embodiments, the UDM may further transmit the second indication information to the AMF. For example, the first message may include the second indication information.

In some embodiments, the UDM may transmit the first message to the AMF by using a Nudm_SDM_Notification message.

In step S706, the AMF transmits the first message to the UE.

In some embodiments, if the AMF receives the second indication information transmitted by the UDM, the AMF may further transmit the second indication information to the UE.

In some embodiments, the AMF may transmit the first message to the UE by using a downlink NAS message.

In step S707, the UE verifies the first verification information.

In some embodiments, the UE may determine, based on the received first indication information, whether to discard the first message. For example, the UE verifies whether a value of the first indication information in the received first message is greater than a quantity, stored in the UE, of times a network transmits the first URSP rule to the UE. If the value of the first indication information in the first message is not greater than the quantity, stored in the UE, of times the network transmits the first URSP rule to the UE, the UE discards the first message.

In some embodiments, the UE may calculate and verify the first verification information based on the first key, the first URSP rule, and the first indication information. If the verification succeeds, the UE determines that the first URSP rule is not tampered with.

In step S708, if the UE receives the second indication information, the UE calculates second verification information, and transmits the second verification information to the AMF.

For example, the UE may transmit the second verification information to the AMF by using an uplink NAS message.

In step S709, the AMF transmits the second verification information to the UDM.

In some embodiments, the AMF may transmit the second verification information to the UDM by using a Nudm_SDM_Info message.

In step S710, the UDM determines, by comparing the received second verification information with stored fourth verification information, whether the UE successfully receives the first URSP rule.

For example, if the second verification information is the same as the fourth verification information, the UDM determines that the UE successfully receives the first URSP rule; or if the second verification information is different from the fourth verification information, the UDM determines that the UE fails to receive the first URSP rule.

The solution of Embodiment 1 can ensure that the URSP rule transmitted by the HPLMN to the roaming UE is not tampered with on a communication link, so that the application traffic of the UE can be protected from being maliciously routed.

### Embodiment 2

Embodiment 2 may be applied in a scenario in which a network side needs to learn a status of executing a URSP by a UE, for example, may be applied in a scenario in which the UE reports the status of executing the URSP to the network side (for example, reporting a value of an unsupported URSP); or may be applied in a scenario in which a network side analyzes application traffic of a UE by using an NWDAF, to obtain a status of executing a URSP by the UE.

FIG. 8 is a schematic flowchart of a wireless communication method according to yet another embodiment of this application. The method shown in FIG. 8 is described from a perspective of an interaction between a first device and a first network element. The first device is an execution point of user consent. For example, the first device may be one or more of following: a UE, an NWDAF, or a PCF. The first network element is a network element that stores user consent information. For example, the first network element may be a UDM network element or a user consent core function (user consent core function, UCCF) network element.

The method shown in FIG. 8 may include step S810. The following describes the step.

In step S810, the first device determines, based on the user consent (user consent) information (or a user consent parameter), whether to execute a first operation.

The first operation is related to a status of executing a URSP by the UE. For example, the first operation may be related to detecting the status of executing the URSP by the UE; the first operation may be related to instructing to report the status of executing the URSP by the UE; or the first operation may be related to reporting the status of executing the URSP by the UE.

In an implementation, if the first device is the NWDAF, the first operation may be related to detecting the status of executing the URSP by the UE. For example, the first operation may include: determining, by the NWDAF based on the user consent information, whether to detect the status of executing the URSP by the UE.

In another implementation, if the first device is the PCF, the first operation may be related to instructing to report the status of executing the URSP by the UE. For example, the first operation may include: determining, by the PCF based on the user consent information, whether to instruct the UE to report the status of executing the URSP.

In still another implementation, if the first device is the UE, the first operation may be related to reporting the status of executing the URSP by the UE. For example, the first operation may include: determining, by the UE based on the user consent information, whether to report the status of executing the URSP. In this case, the UE may serve as the execution point of the user consent, so that the UE can decide whether to report privacy-related content.

It should be noted that the foregoing several implementations may be combined arbitrarily. For example, in the application scenario in which the UE reports the status of executing the URSP to the network side, both the UE and the network side (for example, the PCF) may separately decide, based on the user consent information, whether to enable a network to learn the status of executing the URSP by the UE; or the UE and the network side may jointly decide, based on the user consent information, whether to enable a network to learn the status of executing the URSP by the UE. For another example, in a scenario in which the UE needs to report the status of executing the URSP to the network side and the network side may analyze the application traffic of the UE by using the NWDAF to obtain the status of executing the URSP by the UE, the UE, the PCF, and the NWDAF may separately decide, based on the user consent information, whether to enable a network to learn the status of executing the URSP by the UE, or may jointly decide, based on the user consent information, whether to enable a network to learn the status of executing the URSP by the UE.

In embodiments of this application, the first device needs to determine whether to execute the first operation based on the user consent information, thereby facilitating avoiding or reducing privacy leakage of the UE. That is, in embodiments of this application, a mechanism based on user consent is provided in consideration of privacy protection of the UE, so that the network side learns information about the status of executing the URSP by the UE.

That is, in embodiments of this application, a URSP use case is added for the user consent, so that the first device can determine, based on the user consent information, whether to execute a URSP-related operation, thereby facilitating improving the security of a process of executing the URSP.

The following describes, in detail, the mechanism that is based on the user consent in embodiments of this application.

In embodiments of this application, the user consent information may be used by the execution point (that is, the first device in this application) of the user consent to determine whether to execute the first operation. In a case in which the user consent information indicates that the first device may execute the first operation, the first device may execute the first operation. In a case in which the user consent information indicates that the first device may not execute the first operation, the first device gives up executing the first operation.

In some embodiments, before the first device determines, based on the user consent information, whether to execute the first operation, the first device needs to query for the user consent information, or the first device needs to determine or retrieve the user consent information.

In some embodiments, the user consent information is queried for by the first device based on one or more of following information: identity information of the UE, a first analytic identifier, or a first type identifier.

The identity information of the UE is used to indicate a unique identity of the UE. The identity information of the UE may include a plurality of types, such as a UE ID, an SUPI of the UE, an SUCI of the UE, and a GPSI of the UE.

The first analytic identifier is associated with an analysis of the status of executing the URSP. For example, the first analytic identifier may include an analytic ID (analytic ID), and the analytic ID is used to indicate to request to analyze executing the URSP performed by the UE.

The first type identifier is used to indicate that a type of information requested by the first device is the user consent information. Types of information requested by the first device may include a plurality of types. To distinguish between different types of information, the first device may indicate, based on the first type identifier, that a type of information requested by the first device is the user consent information, to obtain the user consent information associated with whether to execute the first operation. In an implementation, the first type identifier may be expressed as "user consent (user consent)", to indicate that the type of information requested by the first device is the user consent information.

In embodiments of this application, the mechanism based on the user consent is fine-grained, that is, the user consent may be verified for the first analytic identifier (for example, an analytic ID), or a query result of the user consent (mapping (flag) of the user consent is for the first analytic identifier). Therefore, when querying for the user consent information, the first device may query for, based on the first analytic identifier, only user consent information related to the URSP. In this way, signaling overheads can be reduced, and leakage of the user consent information can be avoided.

In some embodiments, when the UE is in different PLMNs, the user consent information may be different according to local laws and regulations. For example, when the UE is in an HPLMN, user consent information queried for by the PCF or the UE may be user consent information corresponding to the HPLMN; or when the UE is in a VPLMN, user consent information queried for by the PCF or the UE may be user consent information corresponding to the VPLMN.

In some embodiments, the user consent information may be user consent information stored in the first device. In other words, the user consent information may be user consent information stored locally.

In some embodiments, the first device may query for the locally stored user consent information by using the identity information of the UE and/or the first analytic identifier.

In some embodiments, if the first device is a UE, user consent information stored in the UE may include the user consent information corresponding to the HPLMN of the UE and/or the user consent information corresponding to the VPLMN of the UE. In this case, the UE may make a decision by using different user consent information based on a status of a network in which the UE is located. For example, a roaming UE may make a decision based on the VPLMN-specific user consent information.

In some embodiments, the user consent information may be stored in a first network element, and the first device needs to obtain (or query for) the user consent information from the first network element.

Still with reference to FIG. 8, in some embodiments, the method shown in FIG. 8 may further include step S805. In step S805, the first device transmits a first request to the first network element. The first request is used to obtain the user consent information.

In some embodiments, the first device may query for, by using one or more of the identity information of the UE, the first analytic identifier, or the first type identifier, the user consent information stored in the first network element. For example, the first request transmitted by the first device to the first network element may carry the identity information of the UE, the first analytic identifier, and the first type identifier of the UE, to indicate a specific type of the user consent information that the first device intends to query for.

In some embodiments, the first network element may be a network element in the HPLMN of the UE. For example, the first network element may be UDM in the HPLMN. In some embodiments, the first network element may be a network element in the VPLMN of the UE. For example, the first network element may be a UCCF in the VPLMN. An example in which the first device is a PCF is used. If the UE is in the HPLMN, the PCF may request the user consent information of the UE from the first network element in the HPLMN; or if the UE is in the VPLMN, the PCF may request the user consent information of the UE from the first network element in the VPLMN. An example in which the first device is a UE is used. If the UE is in the HPLMN, the UE may request the user consent information of the UE from the first network element in the HPLMN; or if the UE is in the VPLMN, the UE may request the user consent information of the UE from the first network element in the VPLMN.

In some embodiments, the first network element may be an end user mentioned below.

The following further describes a requirement and a mechanism of the user consent from aspects of a scope of the user consent, a relationship between the end user and a subscriber, a requirement for the user consent information, user consent checking, and user consent revocation.

Scope of the user consent: A 3GPP function may require the user consent according to the local regulations. Therefore, relevant specifications are required to describe a general security requirement and procedure for supporting enforcement of the user consent in a 3GPP service. Although use cases may be different, the relevant specifications are required to focus on aspects related to storage, checking, and revocation of the user consent. It should be understood that the requirement and the mechanism that are related to the user consent are applicable only to cases required by regional regulations or local policies of operators; otherwise, the requirement and the mechanism are not applicable.

Relationship between the end user (end-user) and the subscriber (subscriber): It is assumed that the user consent is obtained from the end user. The end user is the subscriber or authorizes the subscriber to provide consent on behalf of the end user. Alternatively, the end user is authorized by the subscriber to provide consent. This means that the user consent is always associated with subscription information.

Requirement for the user consent information: The UDM is required to support following services related to the user consent: (1) retrieval of the user consent information; and (2) a notification of a change in the user consent information. Specifically, the user consent information is required to be stored as subscription data in the UDM or a UDR. The user consent information is required to be bound to the SUPI/GPSI. The user consent information is required to be bound to a purpose of data processing. The user consent information is required to include whether the user consent is granted. The user consent is valid only after a time point when the user consent is given, and the user consent remains valid until the user consent is revoked. This means that the user consent information stored in the subscription data has no expiration timer/validity timer. It should be noted that the UDM does not provide the user consent revocation service, but provides only the notification of the change in the user consent information.

User consent verification: Any network element that serves as an execution point of the user consent is required to support retrieving the user consent information from the UDM. Any network element that serves as the execution point of the user consent is required not to accept any service or data processing request unless the user consent is obtained. Any network element that serves as the execution point of the user consent is required to determine the purpose of the data processing before the data processing. If the purpose of the data processing is not implicitly learned from a service request, the execution point of the user consent is required to request to reject a service or is required to reject a service in another manner. A network element that obtains or checks the user consent information is required to determines that the user consent information maintains valid before the user consent information is revoked.

User consent revocation: Any network element that serves as the execution point of the user consent is required to support subscribing to the notification that is of the change in the user consent information and that is provided by the UDM. Consumer network elements (processing data related to the user consent) are required to subscribe to the UDM to obtain the notifications of the change in the user consent information, unless a consent execution network element serving as an enforcement point is tracking these consumer network elements and proactively notifies these consumer network elements of the consent revocation when the user is in a situation. It should be noted that when the consumer network element is authorized to process data with the user consent, it should be noted that a consumer who does not support revocation of an essential service or a related parameter is not authorized. This is important because the user consent may change in the future. Upon receipt of a notification of the user consent revocation, any network element serving as the execution point of the user consent no longer accepts any data processing service request for which user consent is revoked. Upon receipt of a notification of the user consent revocation, any network element serving as the execution point of the user consent may instruct another network element to stop processing a data subject for which user consent is revoked. Upon the user consent revocation is notified, a network element (processing data related to the consent revocation) is required to stop processing and collecting data. Upon receipt of a notification of the user consent revocation, a network element may delete, isolate, or temporarily retain data related to a revoked user consent according to local policies and laws.

For ease of understanding, the following separately provides several examples by using an example in which the first device is the NWDAF, the PCF, or the UE.

### Example 1

Example 1 corresponds to a scenario in which a PCF requests an NWDAF for a status of executing a URSP by a UE. In Example 1, a first device may include the NWDAF. The NWDAF may be an NWDAF located in an HPLMN, or may be an NWDAF located in a VPLMN. In Example 1, a first network element may include UDM.

In Example 1, before the PCF requests the NWDAF to detect the status of executing the URSP, the PCF, as a consumer for analyzing UE data by the NWDAF, needs to obtain user consent, that is, the NWDAF needs to analyze, based on the request of the PCF after determining that the PCF obtains the user consent, the status of executing the URSP by the UE.

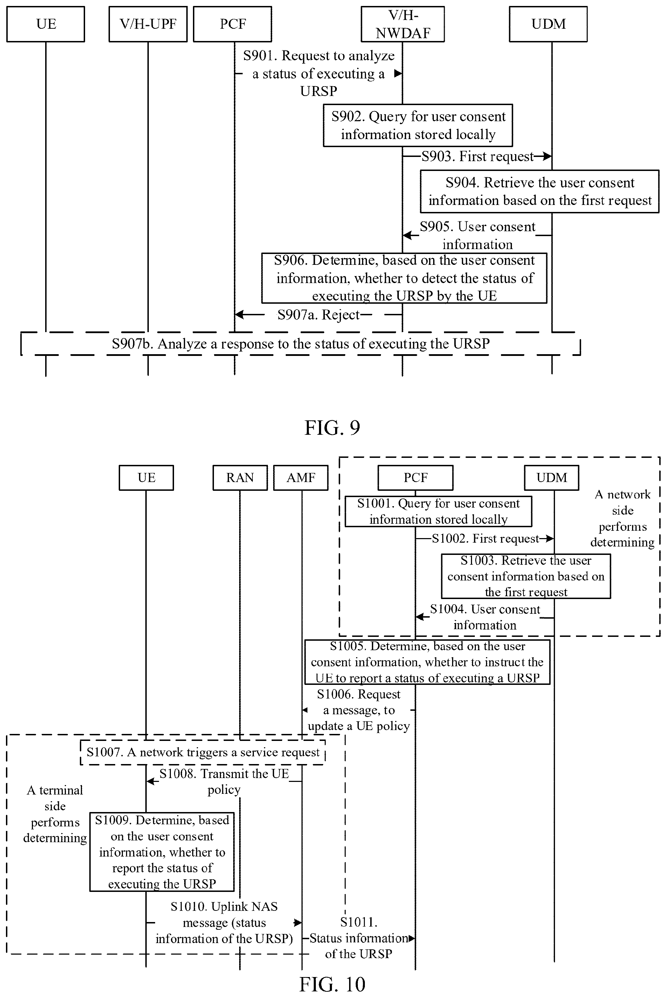

FIG. 9 is a schematic flowchart of analyzing, by a network, application traffic of a UE that incorrectly implements a URSP rule according to an embodiment of this application. The method shown in FIG. 9 may include step S901 to step S907. The following describes these steps.

In step S901, a PCF transmits a request to an NWDAF, to request to analyze a status of executing a URSP.

The request may include a first analytic identifier, for example, an analytic ID related to an analysis of the status of executing the URSP. The first analytic identifier is used to request to analyze the URSP.

The request may further include an analytic filter (analytic filter). The analytic filter may include one or more of following information: an S-NSSAI or a DNN of a PDU session established by the UE; application traffic allowed, according to the URSP rule, to flow to the PDU session; an area of interest; or a UE or a UE list. The application traffic allowed to flow to the PDU session may include a traffic identifier (such as an application ID or an FQDN) of the URSP rule, or may include an allowed service data flow (the consumer may determine the allowed service data flow based on the traffic identifier).

In some embodiments, in consideration of a roaming scenario, the request may indicate that the PCF requests an analysis from an NWDAF in an HPLMN or a VPLMN.

In step S902, the NWDAF queries for user consent information stored locally.

For example, the NWDAF may query for the locally stored user consent information by using identity information of the UE and the first analytic identifier.

In step S903, if the NWDAF retrieves no user consent information stored locally, the NWDAF may transmit a first request to UDM, to request the user consent information.

In some embodiments, the first request may include the identity information of the UE, the first analytic identifier, and the first type identifier.

In step S904, the UDM retrieves the user consent information based on the first request.

For example, the UDM may retrieve the user consent information based on the identity information of the UE and the first analytic identifier.

In step S905, the UDM returns the user consent information to the NWDAF.

In step S906, the NWDAF determines, based on the user consent information, whether to detect the status of executing the URSP by the UE.

In this case, user consent is verified for the first analytic identifier, rather than for the NWDAF analyzing data.

In step S907, the NWDAF returns response information of the request in step S901 to the PCF.

In some embodiments, if the verification of the user consent fails, the NWDAF returns an analysis rejection request to the PCF. In some embodiments, the NWDAF may further return a reason for the analysis rejection request to the PCF. For example, the rejection reason is that the verification of the user consent fails. For a case in which the verification of the user consent fails, one may refer to step S907a in FIG. 9.

In some embodiments, if the verification of the user consent succeeds, the NWDAF subscribes to a UPF detecting mismatched application traffic, and provides the PCF with information about a UE whose application traffic is incorrectly routed. For related descriptions of the NWDAF subscribing to the UPF detecting the mismatched application traffic and providing the PCF with the information about the UE whose application traffic is incorrectly routed, one may refer to the related descriptions in FIG. 3. Details are not repeated herein again. For a case in which the verification of the user consent succeeds, one may refer to step S907b in FIG. 9.

### Example 2

Example 2 corresponds to a scenario in which a UE reports a status of executing a URSP to a network side. In Example 2, a first device may include a PCF and/or the UE. The PCF may be a PCF located in an HPLMN, and the UE may be located in the HPLMN or a VPLMN. In Example 2, a first network element may include UDM.

In Example 2, the method procedure may include two parts. The network side and the UE may separately decide, based on user consent, whether to enable the network side to obtain the status of executing the URSP by the UE, or may jointly decide whether to enable the network side to obtain the status of executing the URSP by the UE.

FIG. 10 is a schematic flowchart of reporting, by a UE, a status of executing a URSP according to an embodiment of this application. As shown in FIG. 10, the method may include step S1001 to step S1011.

In step S1001, a PCF, as an execution point of user consent related to a URSP use case, queries for locally stored user consent information based on identity information of the UE.

In some embodiments, the PCF serving as the execution point of the user consent related to the URSP use case indicates that the PCF determines, based on the user consent information, whether to instruct the UE to report data related to the status of executing the URSP.

In step S1002, if the PCF retrieves no user consent information stored locally, the PCF may transmit a first request to UDM, to request the user consent information.

In some embodiments, the first request may include the identity information of the UE and a first type identifier.

In some embodiments, the PCF may request the user consent information by using a Nudm_SDM_Get request.

In step S1003, the UDM retrieves the user consent information based on the first request.

For example, the UDM may retrieve the user consent information based on the identity information of the UE.

In step S1004, the UDM returns the user consent information to the PCF.

In some embodiments, the UDM may return the user consent information by using a Nudm_SDM_Get response.

In step S1005, the PCF determines, based on the user consent information, whether to instruct the UE to report the status of executing the URSP by the UE.

In this case, the PCF may check user consent information corresponding to a data type "URSP" in the user consent information, and a purpose of data processing is to enable the UE to report the status of executing the URSP, for example, to report a URSP rule that is not successfully executed.

In some embodiments, if verification of user consent fails, the current reporting ends, that is, the PCF gives up instructing the UE to report the status of executing the URSP.

In some embodiments, if verification of user consent succeeds, subsequent steps may be performed.

In step S1006, the PCF transmits a message to an AMF, to update a UE policy.

For example, the PCF may invoke a Namf_Communication_N1N2MessageTransfer service provided by the AMF, to transmit the message to the AMF. The message may include the identity information (for example, an SUPI) of the UE and a UE policy container.

In step S1007, if the UE is registered to the AMF in a 3GPP or non-3GPP access manner, the AMF may transparently transmit the UE policy container to the UE.

In step S1008, the AMF transparently transmits, to the UE, the UE policy container from the PCF, where the UE policy container includes an indication of obtaining information related to URSP for the UE.

In step S1009, after receiving the indication, the UE may determine, based on user consent information stored in the UE, whether to report information about the status of executing the URSP.

In some embodiments, the UE may further determine, based on the user consent information retrieved from the UDM, whether to report the information about the status of executing the URSP.

In step S1010, if the verification of the user consent succeeds, the UE evaluates each URSP rule in the received UE policy container and determines which components (for example, a TD type, TD="FQDN=ABC.com") in the UPSR rules are not recognized by the UE, and the UE reports status information of the URSP rule in the UE policy container to the AMF.

In some embodiments, the UE may report the status information of the URSP rule to the AMF by using an uplink NAS message.

In some embodiments, if the verification of the user consent fails, the UE may return rejection information to the PCF. In some embodiments, the UE may further return a rejection reason to the PCF, for example, the rejection reason is that the verification of the user consent fails.

In step S1011, the AMF transmits the status information of the URSP rule to the PCF.

In an implementation, the AMF may transmit the status information of the URSP rule to the PCF by invoking a Namf_Communication_N1MessageNotify service.

Based on the foregoing steps, the PCF may update a parameter based on a feedback of the UE (for example, if some parameters in a TD are configured incorrectly), and provide an updated URSP to the UE again.

### Example 3

Example 3 corresponds to a scenario in which a UE reports a status of executing a URSP to a network side. In Example 3, a first device may include a PCF and/or the UE. The PCF may be a PCF located in an HPLMN, and the UE may be located in a VPLMN, that is, the UE in Example 3 is a roaming UE. In Example 3, a first network element may include a UCCF.

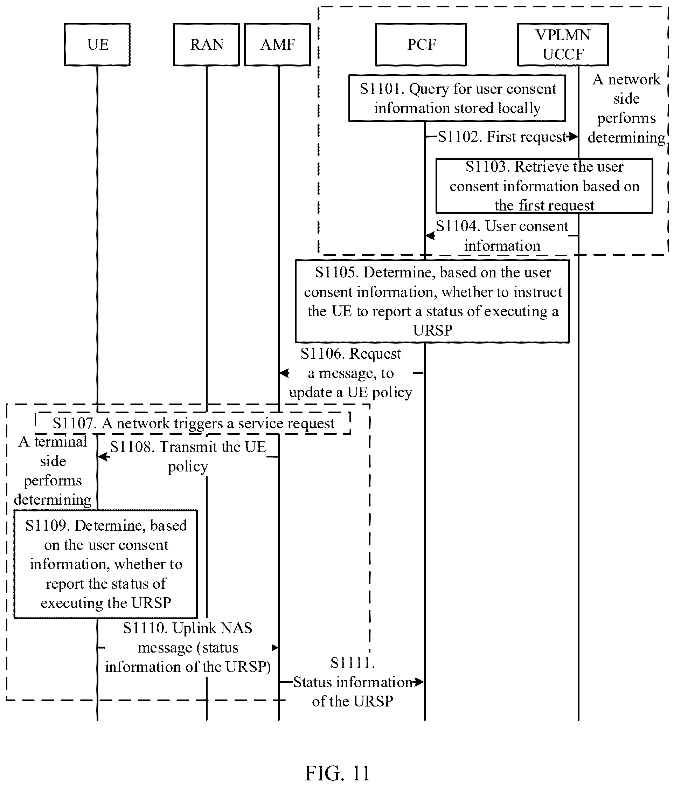

FIG. 11 is a schematic flowchart of reporting a status of executing a URSP by a UE according to another embodiment of this application. The method shown in FIG. 11 may include step S1101 to step S1111.

Example 3 is similar to Example 2. In consideration that the UE is in different PLMNs, user consent parameters may be different according to local laws and regulations. Therefore, in step S1102 to step S1104, for a roaming UE, a PCF obtains user consent information of the UE from a first network element (for example, a UCCF) in a VPLMN. In step S1109, the UE stores HPLMN-specific user consent information and VPLMN-specific user consent information, and makes a decision by using different user consent parameters based on a status of a network in which the UE is located. For example, the roaming UE makes a decision based on the VPLMN-specific user consent information.

For other content of Example 3, one may refer to the related descriptions in Example 2. For brevity, details are not repeated herein again.

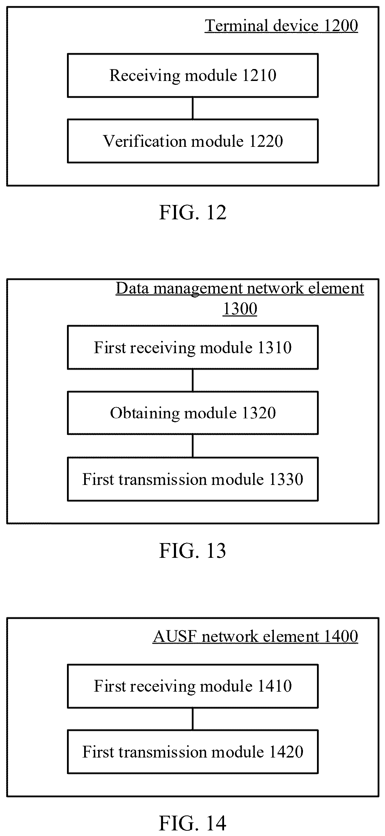

The method embodiments of this application are described above in detail with reference to FIG. 1 to FIG. 11. Apparatus embodiments of this application are described below in detail with reference to FIG. 12 to FIG. 16. It should be understood that the descriptions of the method embodiments correspond to descriptions of the apparatus embodiments. Therefore, for parts that are not described in detail, one may refer to the foregoing method embodiments.

FIG. 12 is a schematic structural diagram of a terminal device according to an embodiment of this application. The terminal device 1200 shown in FIG. 12 may include a receiving module 1210 and a verification module 1220.

The receiving module 1210 may be configured to receive a first message. The first message includes a first URSP rule and first verification information, and the first URSP rule corresponds to a VPLMN of the terminal device.

The verification module 1220 may be configured to verify the first verification information based on the first URSP rule and a first key. The first verification information is obtained based on the first URSP rule and the first key.

Optionally, the first message includes first indication information, the first indication information is used to indicate a quantity of times a network transmits the first URSP rule to the terminal device, and the verification module 1220 is further configured to verify the first verification information based on the first URSP rule, the first key, and the first indication information.

Optionally, the terminal device 1200 further includes: a discarding module, configured to discard the first message if the quantity, indicated by the first indication information, of times the network transmits the first URSP rule to the terminal device is less than or equal to a quantity, stored in the terminal device, of times the network transmits the first URSP rule to the terminal device.

Optionally, the first message includes second indication information, the second indication information is used to instruct the terminal device to feed back acknowledgment information of the first URSP rule, and the terminal device 1200 further includes: a transmission unit, configured to transmit second verification information to a data management network element. The second verification information is obtained based on the first key and the second indication information.

Optionally, the verification module 1220 is further configured to: generate third verification information based on the first URSP rule and the first key, and determine whether the third verification information is the same as the first verification information.

Optionally, the terminal device 1200 further includes a determining module. The determining module is configured to: if the third verification information is the same as the first verification information, determine that the first URSP rule is not tampered with; and/or if the third verification information is different from the first verification information, determine that the first URSP rule is tampered with.

Optionally, the first URSP rule is a URSP rule that is configured for the terminal device and that is specific to the VPLMN of the terminal device.

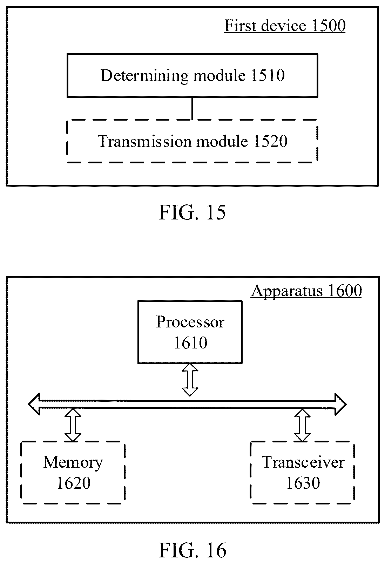

Optionally, the receiving module 1210 may be a transceiver 1630, and the verification module 1220 may be a processor 1610. The terminal device 1200 may further include a memory 1620. Details are shown in FIG. 16.

FIG. 13 is a schematic structural diagram of a data management network element according to an embodiment of this application. The data management network element shown in FIG. 13 may include a first receiving module 1310, an obtaining module 1320, and a first transmission module 1330.

The first receiving module 1310 may be configured to receive a first URSP rule. The first URSP rule corresponds to a VPLMN of a terminal device.

The obtaining module 1320 may be configured to obtain first verification information. The first verification information is obtained based on the first URSP rule and a first key.

The first transmission module 1330 may be configured to transmit a first message to the terminal device. The first message includes the first URSP rule and the first verification information.

Optionally, the first message includes first indication information, the first indication information is used to indicate a quantity of times a network transmits the first URSP rule to the terminal device, and the first indication information is used by the terminal device to verify the first verification information.

Optionally, the obtaining module 1320 is further configured to: transmit first information to an AUSF network element, where the first information is used by the AUSF network element to generate the first verification information; and receive the first verification information transmitted by the AUSF network element.

Optionally, the first information includes one or more of following information: an identity of the terminal device or the first URSP rule.

Optionally, the first message includes second indication information, the second indication information is used to instruct the terminal device to feed back acknowledgment information of the first URSP rule. The data management network element 1300 further includes: a second receiving module, configured to receive second verification information transmitted by the terminal device, where the second verification information is generated based on the first key and the second indication information; and a verification module, configured to verify the second verification information.

Optionally, the verification module is further configured to: obtain fourth verification information, and determine whether the second verification information is the same as the fourth verification information. The data management network element 1300 further includes a determining module. The determining module is configured to: if the second verification information is the same as the fourth verification information, determine that the terminal device successfully receives the first URSP rule; and/or if the second verification information is different from the fourth verification information, determine that the terminal device fails to receive the first URSP rule.

Optionally, the data management network element 1300 further includes: a second transmission module, configured to transmit the second indication information to an AUSF network element, where the second indication information is used to indicate that the terminal device feeds back acknowledgment information of the first URSP rule. The process of obtaining fourth verification information includes: receiving the fourth verification information transmitted by the AUSF network element, where the fourth verification information is generated by the AUSF network element based on the first key and the second indication information.

Optionally, the first URSP rule is a URSP rule that is configured for the terminal device and that is specific to the VPLMN of the terminal device.

Optionally, the first receiving module 1310 and the first transmission module 1330 may be transceivers 1630, and the obtaining module 1320 may be a processor 1610. The data management network element 1300 may further include a memory 1620. Details are shown in FIG. 16.

FIG. 14 is a schematic structural diagram of an AUSF network element according to an embodiment of this application. The AUSF network element shown in FIG. 14 may include a first receiving module 1410 and a first transmission module 1420.

The first receiving module 1410 may be configured to receive first information transmitted by a data management network element. The first information is used by the AUSF network element to generate first verification information.

The first transmission module 1420 may be configured to transmit the first verification information to the data management network element. The first verification information is generated based on a first URSP rule and a first key, and the first URSP rule corresponds to a VPLMN of a terminal device.

Optionally, the first information includes one or more of following information: an identity of the terminal device or the first URSP rule.

Optionally, the AUSF network element 1400 further includes: a second transmission module, configured to transmit first indication information to the data management network element. The first indication information is used to indicate a quantity of times a network transmits the first URSP rule to the terminal device, and the first indication information is used by the terminal device to verify the first verification information.

Optionally, the AUSF network element 1400 further includes: a second receiving module, configured to receive second indication information transmitted by the data management network element, where the second indication information is used to indicate that the terminal device feeds back acknowledgment information of the first URSP rule; and a third transmission module, configured to transmit fourth verification information to the data management network element, where the fourth verification information is generated based on the first key and the second indication information.

Optionally, the first URSP rule is a URSP rule that is configured for the terminal device and that is specific to the VPLMN of the terminal device.

Optionally, the first receiving module 1410 and the first transmission module 1420 may be transceivers 1630. The AUSF network element 1400 may further include a processor 1610 and a memory 1620. Details are shown in FIG. 16.

FIG. 15 is a schematic structural diagram of a first device according to an embodiment of this application. The first device 1500 shown in FIG. 15 may include a determining module 1510.

The determining module 1510 may be configured to determine, based on user consent information, whether to execute a first operation. The first operation is related to a status of executing a user equipment route selection policy URSP by a terminal device.

Optionally, the user consent information is queried for by the first device based on one or more of following information: identity information of the terminal device; a first analytic identifier, where the first analytic identifier is associated with an analysis of a status of executing a URSP; or a first type identifier, where the first type identifier is used to indicate that a type of information requested by the first device is the user consent information.

Optionally, the first device is one or more of following: a terminal device, a network data analytics function NWDAF network element, or a policy control function PCF network element.

Optionally, if the first device is the NWDAF network element, the first operation includes: determining, by the NWDAF network element based on the user consent information, whether to detect a status of executing the URSP by the terminal device; and/or if the first device is the PCF network element, the first operation includes: determining, by the PCF network element based on the user consent information, whether to instruct the terminal device to report the status of executing the URSP; and/or if the first device is the terminal device, the first operation includes: determining, by the terminal device based on the user consent information, whether to report the status of executing the URSP.

Optionally, the user consent information is stored in the first device.

Optionally, if the first device is a terminal device, user consent information stored in the terminal device includes user consent information corresponding to a home public land mobile network HPLMN of the terminal device and/or user consent information corresponding to a VPLMN of the terminal device.

Optionally, the first device 1500 further includes: a transmission module 1520, configured to transmit a first request to a first network element. The first request is used to obtain the user consent information.

Optionally, the first network element is a network element in the HPLMN of the terminal device or a network element in the VPLMN of the terminal device.

Optionally, the determining module 1510 may be a processor 1610. The first device 1500 may further include a memory 1620 and a transceiver 1630. Details are shown in FIG. 16.

FIG. 16 is a schematic structural diagram of a communications apparatus according to an embodiment of this application. Dashed lines in FIG. 16 indicate that a unit or module is optional. The apparatus 1600 may be configured to implement the methods described in the foregoing method embodiments. The apparatus 1600 may be a chip, a terminal device, or a network device.

The apparatus 1600 may include one or more processors 1610. The processor 1610 may support the apparatus 1600 in implementing the methods described in the foregoing method embodiments. The processor 1610 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1600 may further include one or more memories 1620. The memory 1620 stores a program that may be executed by the processor 1610 to cause the processor 1610 to perform the methods described in the foregoing method embodiments. The memory 1620 may be independent of the processor 1610 or may be integrated into the processor 1610.

The apparatus 1600 may further include a transceiver 1630. The processor 1610 may communicate with another device or chip by using the transceiver 1630. For example, the processor 1610 may transmit data to and receive data from another device or chip through the transceiver 1630.

An embodiment of this application further provides a computer-readable storage medium for storing a program. The computer-readable storage medium may be applied to the terminal or the network device provided in the embodiments of this application, and the program causes a computer to perform the methods to be performed by the terminal or the network device in various embodiments of this application.

An embodiment of this application further provides a computer program product. The computer program product includes a program. The computer program product may be applied to the terminal or the network device provided in embodiments of this application, and the program causes a computer to perform the methods to be performed by the terminal or the network device in various embodiments of this application.

An embodiment of this application further provides a computer program. The computer program may be applied to the terminal or the network device provided in the embodiments of this application, and the computer program causes a computer to perform the methods to be performed by the terminal or the network device in various embodiments of this application.

It should be understood that the terms "system" and "network" in this application may be used interchangeably. In addition, the terms used in this application are only used to explain the specific embodiments of this application, and are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In the embodiments of this application, "indicate" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that, the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of the embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
receiving, by a terminal device, a first message, wherein the first message comprises a first user equipment route selection policy URSP rule and first verification information, and the first URSP rule corresponds to a visited public land mobile network VPLMN of the terminal device; and
verifying, by the terminal device, the first verification information based on the first URSP rule and a first key,
wherein the first verification information is obtained based on the first URSP rule and the first key.

2. The method according to claim 1, wherein the first message comprises first indication information, the first indication information is used to indicate a quantity of times a network transmits the first URSP rule to the terminal device,
wherein the verifying, by the terminal device, the first verification information based on the first URSP rule and a first key comprises:
verifying, by the terminal device, the first verification information based on the first URSP rule, the first key, and the first indication information.

3. The method according to claim 2, wherein the method further comprises:
discarding, by the terminal device, the first message if the quantity, indicated by the first indication information, of times the network transmits the first URSP rule to the terminal device is less than or equal to a quantity, stored in the terminal device, of times the network transmits the first URSP rule to the terminal device.

4. The method according to any one of claims 1 to 3, wherein the first message comprises second indication information, and the second indication information is used to indicate that the terminal device feeds back acknowledgment information of the first URSP rule,
wherein the method further comprises:
transmitting, by the terminal device, second verification information to a data management network element, wherein the second verification information is obtained based on the first key and the second indication information.

5. The method according to any one of claims 1 to 4, wherein the verifying, by the terminal device, the first verification information based on the first URSP rule and a first key comprises:
generating, by the terminal device, third verification information based on the first URSP rule and the first key, and determining whether the third verification information is the same as the first verification information.

6. The method according to claim 5, wherein the method further comprises:
if the third verification information is the same as the first verification information, determining, by the terminal device, that the first URSP rule is not tampered with; and/or
if the third verification information is different from the first verification information, determining, by the terminal device, that the first URSP rule is tampered with.

7. The method according to any one of claims 1 to 6, wherein the first URSP rule is a URSP rule that is configured for the terminal device and that is specific to the VPLMN of the terminal device.

8. A wireless communication method, comprising:
receiving, by a data management network element, a first user equipment route selection policy URSP rule, wherein the first URSP rule corresponds to a visited public land mobile network VPLMN of a terminal device;
obtaining, by the data management network element, first verification information, wherein the first verification information is obtained based on the first URSP rule and a first key; and
transmitting, by the data management network element, a first message to the terminal device, wherein the first message comprises the first URSP rule and the first verification information.

9. The method according to claim 8, wherein the first message comprises first indication information, the first indication information is used to indicate a quantity of times a network transmits the first URSP rule to the terminal device, and the first indication information is used by the terminal device to verify the first verification information.

10. The method according to claim 8 or 9, wherein the obtaining, by the data management network element, first verification information comprises:
transmitting, by the data management network element, first information to an authentication server function AUSF network element, wherein the first information is used by the AUSF network element to generate the first verification information; and
receiving, by the data management network element, the first verification information transmitted by the AUSF network element.

11. The method according to claim 10, wherein the first information comprises one or more of following information: an identity of the terminal device or the first URSP rule.

12. The method according to any one of claims 8 to 11, wherein the first message comprises second indication information, and the second indication information is used to indicate that the terminal device feeds back acknowledgment information of the first URSP rule,
wherein the method further comprises:
receiving, by the data management network element, second verification information transmitted by the terminal device, wherein the second verification information is generated by the terminal device based on the first key and the second indication information; and
verifying, by the data management network element, the second verification information.

13. The method according to claim 12, wherein the verifying, by the data management network element, the second verification information comprises:
obtaining, by the data management network element, fourth verification information, and determining whether the second verification information is the same as the fourth verification information;
wherein the method further comprises:
if the second verification information is the same as the fourth verification information, determining, by the data management network element, that the terminal device successfully receives the first URSP rule; and/or
if the second verification information is the different from the fourth verification information, determining, by the data management network element, that the terminal device fails to receive the first URSP rule.

14. The method according to claim 13, wherein the method further comprises:
transmitting, by the data management network element, second indication information to an AUSF network element, wherein the second indication information is used to indicate that the terminal device feeds back acknowledgment information of the first URSP rule,
wherein the obtaining, by the data management network element, fourth verification information comprises:
receiving, by the data management network element, the fourth verification information transmitted by the AUSF network element, wherein the fourth verification information is generated by the AUSF network element based on the first key and the second indication information.

15. The method according to any one of claims 8 to 14, wherein the first URSP rule is a URSP rule that is configured for the terminal device and that is specific to the VPLMN of the terminal device.

16. A wireless communication method, comprising:
receiving, by an authentication server function AUSF network element, first information transmitted by a data management network element, wherein the first information is used by the AUSF network element to generate first verification information; and
transmitting, by the AUSF network element, the first verification information to the data management network element,
wherein the first verification information is generated based on a first user equipment route selection policy URSP rule and a first key, and the first URSP rule corresponds to a visited public land mobile network VPLMN of a terminal device.

17. The method according to claim 16, wherein the first information comprises one or more of following information: an identity of the terminal device or the first URSP rule.

18. The method according to claim 16 or 17, wherein the method further comprises:
transmitting, by the AUSF network element, first indication information to the data management network element, wherein the first indication information is used to indicate a quantity of times a network transmits the first URSP rule to the terminal device, and the first indication information is used by the terminal device to verify the first verification information.

19. The method according to any one of claims 16 to 18, wherein the method further comprises:
receiving, by the AUSF network element, second indication information transmitted by the data management network element, wherein the second indication information is used to indicate that the terminal device feeds back acknowledgment information of the first URSP rule; and
transmitting, by the AUSF network element, fourth verification information to the data management network element, wherein the fourth verification information is generated based on the first key and the second indication information.

20. The method according to any one of claims 16 to 19, wherein the first URSP rule is a URSP rule that is configured for the terminal device and that is specific to the VPLMN of the terminal device.

21. A wireless communication method, comprising:
determining, by a first device based on user consent information, whether to execute a first operation, wherein the first operation is related to a status of executing a user equipment route selection policy URSP by a terminal device.

22. The method according to claim 21, wherein the user consent information is queried for by the first device based on one or more of following information:
identity information of the terminal device;
a first analytic identifier, wherein the first analytic identifier is associated with an analysis of the status of executing the URSP; or
a first type identifier, wherein the first type identifier is used to indicate that a type of information requested by the first device is the user consent information.

23. The method according to claim 21 or 22, wherein the first device is one or more of following: a terminal device, a network data analytics function NWDAF network element, or a policy control function PCF network element.

24. The method according to claim 23, wherein
if the first device is the NWDAF network element, the first operation comprises: determining, by the NWDAF network element based on the user consent information, whether to detect the status of executing the URSP by the terminal device;
if the first device is the PCF network element, the first operation comprises: determining, by the PCF network element based on the user consent information, whether to instruct the terminal device to report the status of executing the URSP; and/or
if the first device is the terminal device, the first operation comprises: determining, by the terminal device based on the user consent information, whether to report the status of executing the URSP.

25. The method according to any one of claims 21 to 24, wherein the user consent information is stored in the first device.

26. The method according to claim 25, wherein if the first device is a terminal device, user consent information stored in the terminal device comprises user consent information corresponding to a home public land mobile network HPLMN of the terminal device and/or user consent information corresponding to a VPLMN of the terminal device.

27. The method according to any one of claims 21 to 26, wherein the method further comprises:
transmitting, by the first device, a first request to a first network element, wherein the first request is used to obtain the user consent information.

28. The method according to claim 27, wherein the first network element is a network element in an HPLMN of the terminal device or a network element in a VPLMN of the terminal device.

29. A terminal device, comprising:
a receiving module, configured to receive a first message, wherein the first message comprises a first user equipment route selection policy URSP rule and first verification information, and the first URSP rule corresponds to a visited public land mobile network VPLMN of the terminal device; and
a verification module, configured to verify the first verification information based on the first URSP rule and a first key,
wherein the first verification information is obtained based on the first URSP rule and the first key.

30. The terminal device according to claim 29, wherein the first message comprises first indication information, the first indication information is used to indicate a quantity of times a network transmits the first URSP rule to the terminal device,
wherein the verification module is further configured to:
verify the first verification information based on the first URSP rule, the first key, and the first indication information.

31. The terminal device according to claim 30, wherein the terminal device further comprises:
a discarding module, configured to discard the first message if the quantity, indicated by the first indication information, of times the network transmits the first URSP rule to the terminal device is less than or equal to a quantity, stored in the terminal device, of times the network transmits the first URSP rule to the terminal device.

32. The terminal device according to any one of claims 29 to 31, wherein the first message comprises second indication information, and the second indication information is used to indicate that the terminal device feeds back acknowledgment information of the first URSP rule,
wherein the terminal device further comprises:
a transmission unit, configured to transmit second verification information to a data management network element, wherein the second verification information is obtained based on the first key and the second indication information.

33. The terminal device according to any one of claims 29 to 32, wherein the verification module is further configured to:
generate third verification information based on the first URSP rule and the first key, and determine whether the third verification information is the same as the first verification information.

34. The terminal device according to claim 33, wherein the terminal device further comprises a determining module, and the determining module is configured to:
if the third verification information is the same as the first verification information, determine that the first URSP rule is not tampered with; and/or
if the third verification information is different from the first verification information, determine that the first URSP rule is tampered with.

35. The terminal device according to any one of claims 29 to 34, wherein the first URSP rule is a URSP rule that is configured for the terminal device and that is specific to the VPLMN of the terminal device.

36. A data management network element, comprising:
a first receiving module, configured to receive a first user equipment route selection policy URSP rule, wherein the first URSP rule corresponds to a visited public land mobile network VPLMN of a terminal device;
an obtaining module, configured to obtain first verification information, wherein the first verification information is obtained based on the first URSP rule and a first key; and
a first transmission module, configured to transmit a first message to the terminal device, wherein the first message comprises the first URSP rule and the first verification information.

37. The data management network element according to claim 36, wherein the first message comprises first indication information, the first indication information is used to indicate a quantity of times a network transmits the first URSP rule to the terminal device, and the first indication information is used by the terminal device to verify the first verification information.

38. The data management network element according to claim 36 or 37, wherein the obtaining module is further configured to:
transmit first information to an authentication server function AUSF network element, wherein the first information is used by the AUSF network element to generate the first verification information; and
receive the first verification information transmitted by the AUSF network element.

39. The data management network element according to claim 38, wherein the first information comprises one or more of following information: an identity of the terminal device or the first URSP rule.

40. The data management network element according to any one of claims 36 to 39, wherein the first message comprises second indication information, and the second indication information is used to indicate that the terminal device feeds back acknowledgment information of the first URSP rule,
wherein the data management network element further comprises:
a second receiving module, configured to receive second verification information transmitted by the terminal device, wherein the second verification information is generated by the terminal device based on the first key and the second indication information; and
a verification module, configured to verify the second verification information.

41. The data management network element according to claim 40, wherein the verification module is further configured to:
obtain fourth verification information, and determine whether the second verification information is the same as the fourth verification information;
wherein the data management network element further comprises a determining module, wherein the determining module is configured to:
if the second verification information is the same as the fourth verification information, determine that the terminal device successfully receives the first URSP rule; and/or
if the second verification information is different from the fourth verification information, determine that the terminal device fails to receive the first URSP rule.

42. The data management network element according to claim 41, wherein the data management network element further comprises:
a second transmission module, configured to transmit the second indication information to an AUSF network element, wherein the second indication information is used to indicate that the terminal device feeds back acknowledgment information of the first URSP rule,
wherein the obtaining fourth verification information comprises:
receiving the fourth verification information transmitted by the AUSF network element, wherein the fourth verification information is generated by the AUSF network element based on the first key and the second indication information.

43. The data management network element according to any one of claims 36 to 42, wherein the first URSP rule is a URSP rule that is configured for the terminal device and that is specific to the VPLMN of the terminal device.

44. An authentication server function AUSF network element, comprising:
a first receiving module, configured to receive first information transmitted by a data management network element, wherein the first information is used by the AUSF network element to generate first verification information; and
a first transmission module, configured to transmit the first verification information to the data management network element,
wherein the first verification information is generated based on a first user equipment route selection policy URSP rule and a first key, and the first URSP rule corresponds to a visited public land mobile network VPLMN of a terminal device.

45. The AUSF network element according to claim 44, wherein the first information comprises one or more of following information: an identity of the terminal device or the first URSP rule.

46. The AUSF network element according to claim 44 or 45, wherein the AUSF network element further comprises:
a second transmission module, configured to transmit first indication information to the data management network element, wherein the first indication information is used to indicate a quantity of times a network transmits the first URSP rule to the terminal device, and the first indication information is used by the terminal device to verify the first verification information.

47. The AUSF network element according to any one of claims 44 to 46, wherein the AUSF network element further comprises:
a second receiving module, configured to receive second indication information transmitted by the data management network element, wherein the second indication information is used to indicate that the terminal device feeds back acknowledgment information of the first URSP rule; and
a third transmission module, configured to transmit fourth verification information to the data management network element, wherein the fourth verification information is generated based on the first key and the second indication information.

48. The AUSF network element according to any one of claims 44 to 47, wherein the first URSP rule is a URSP rule that is configured for the terminal device and that is specific to the VPLMN of the terminal device.

49. A device, wherein the device is a first device, and the first device comprises:
a determining module, configured to determine, based on user consent information, whether to execute a first operation, wherein the first operation is related to a status of executing a user equipment route selection policy URSP by a terminal device.

50. The device according to claim 49, wherein the user consent information is queried for by the first device based on one or more of following information:
identity information of the terminal device;
a first analytic identifier, wherein the first analytic identifier is associated with an analysis of the status of executing the URSP; or
a first type identifier, wherein the first type identifier is used to indicate that a type of information requested by the first device is the user consent information.

51. The device according to claim 49 or 50, wherein the first device is one or more of following: a terminal device, a network data analytics function NWDAF network element, or a policy control function PCF network element.

52. The device according to claim 51, wherein
if the first device is the NWDAF network element, the first operation comprises: determining, by the NWDAF network element based on the user consent information, whether to detect the status of executing the URSP by the terminal device;
if the first device is the PCF network element, the first operation comprises: determining, by the PCF network element based on the user consent information, whether to instruct the terminal device to report the status of executing the URSP; and/or
if the first device is the terminal device, the first operation comprises: determining, by the terminal device based on the user consent information, whether to report the status of executing the URSP.

53. The device according to any one of claims 49 to 52, wherein the user consent information is stored in the first device.

54. The device according to claim 53, wherein if the first device is a terminal device, user consent information stored in the terminal device comprises user consent information corresponding to a home public land mobile network HPLMN of the terminal device and/or user consent information corresponding to a VPLMN of the terminal device.

55. The device according to any one of claims 49 to 54, wherein the first device further comprises:
a transmission module, configured to transmit a first request to a first network element, wherein the first request is used to obtain the user consent information.

56. The device according to claim 55, wherein the first network element is a network element in an HPLMN of the terminal device or a network element in a VPLMN of the terminal device.

57. A terminal device, comprising a memory, a processor, and a transceiver, wherein the memory is configured to store a program, and the processor is configured to invoke the program in the memory, to cause the terminal device to perform the method according to any one of claims 1 to 7.

58. A data management network element, comprising a memory, a processor, and a transceiver, wherein the memory is configured to store a program, and the processor is configured to invoke the program in the memory, to cause the data management network element to perform the method according to any one of claims 8 to 15.

59. An authentication server function AUSF network element, comprising a memory, a processor, and a transceiver, wherein the memory is configured to store a program, and the processor is configured to invoke the program in the memory, to cause the AUSF network element to perform the method according to any one of claims 16 to 20.

60. A device, wherein the device is a first device, the first device comprises a memory, a processor, and a transceiver, the memory is configured to store a program, and the processor is configured to invoke the program in the memory, to cause the first device to perform the method according to any one of claims 21 to 28.

61. An apparatus, comprising a processor, configured to invoke a program from a memory, to cause the apparatus to perform the method according to any one of claims 1 to 28.

62. A chip, comprising a processor, configured to invoke a program from a memory, to cause a device on which the chip is installed to perform the method according to any one of claims 1 to 28.

63. A computer-readable storage medium, wherein the computer-readable storage medium stores a program, and the program causes a computer to perform the method according to any one of claims 1 to 28.

64. A computer program product, comprising a program that causes a computer to perform the method according to any one of claims 1 to 28.

65. A computer program, wherein the computer program causes a computer to perform the method according to any one of claims 1 to 28.
